# EUROPEAN PATENT APPLICATION

(11) **EP 4 391 167 A1**
(43) Date of publication of application: **26.06.2024**
(21) Application number: 22858509.7
(22) Date of filing: 18.08.2022
(51) Int. Cl.: H01M 50/184, B32B 15/08, H01M 50/105, H01M 50/129, H01M 50/178, H01M 50/188, H01M 50/193, H01M 50/197, H01M 50/198, H01M 50/557

(54) **ADHESIVE FILM FOR METAL TERMINAL, METHOD FOR PRODUCING ADHESIVE FILM FOR METAL TERMINAL, METAL TERMINAL PROVIDED WITH ADHESIVE FILM FOR METAL TERMINAL, POWER STORAGE DEVICE, AND METHOD FOR PRODUCING POWER STORAGE DEVICE**

(30) Priority: 19.08.2021 JP 2021134260
(71) Applicant: Dai Nippon Printing Co., Ltd., Tokyo 162-8001 (JP)
(72) Inventor: MOCHIZUKI, Youichi, Tokyo 162-8001 (JP); KATOU, Takahiro, Tokyo 162-8001 (JP); TANAKA, Jun, Tokyo 162-8001 (JP); FUJIWARA, Ryo, Tokyo 162-8001 (JP)
(74) Representative: Müller-Boré & Partner Patentanwälte PartG mbB
(86) International application number: PCT/JP2022/031185
(87) International publication number: WO 2023/022191

(57) **Abstract**

An adhesive film for metal terminal, which is to be interposed between a metal terminal electrically connected to an electrode of a power storage device element and a power storage device packaging material for sealing the power storage device element, wherein the adhesive film for metal terminal comprises a laminate comprising at least an acid-modified polyolefin layer for forming a metal terminal-facing surface and a polyolefin layer for forming a power storage device packaging material-facing surface, and a ratio of arithmetic surface roughness RaA (µm) of the metal terminal-facing surface of the acid-modified polyolefin layer to arithmetic surface roughness RaB (µm) of the power storage device packaging material-facing surface of the polyolefin layer satisfies the relationship: RaA/RaB > 1.2.

## Description

### Technical Field

The present disclosure relates to an adhesive film for metal terminal, a method for producing the adhesive film for metal terminal, a metal terminal with the adhesive film for metal terminal, a power storage device, and a method for producing the power storage device.

### Background Art

Various types of power storage devices have been heretofore developed, and in every power storage device, a power storage device packaging material is an essential member for sealing a power storage device element including electrodes and an electrolyte. Metallic power storage device packaging materials have been heretofore widely used as power storage device packaging materials. In recent years, along with improvements in the performance of electric cars, hybrid electric cars, personal computers, cameras, mobile phones, and the like, power storage devices have been required to be diversified in shape and also to be thinner and lighter weight. However, the widely used metallic power storage device packaging materials are disadvantageous in that they have difficulty in keeping up with the diversification of shapes and are limited in weight reduction.

Thus, a laminated sheet in which a base material layer/an adhesive layer/a barrier layer/a heat-sealable resin layer are laminated in this order has been recently proposed as a power storage device packaging material that can be readily processed into various shapes and can achieve a thickness reduction and a weight reduction. When such a laminated film-shaped power storage device packaging material is used, a power storage device element is sealed with the power storage device packaging material by heat-sealing a peripheral region of the power storage device packaging material, with the heat-sealable resin layers, positioned as the innermost layers of the power storage device packaging material, facing each other.

Metal terminals protrude from the heat-sealed region of the power storage device packaging material, and the power storage device element sealed with the power storage device packaging material is electrically connected to the outside via the metal terminals electrically connected to the electrodes of the power storage device element. That is, in the heat-sealed region of the power storage device packaging material, the region where each of the metal terminals is present is heat-sealed with the metal terminal sandwiched between the heat-sealable resin layers. Because the metal terminal and the heat-sealable resin layer are formed of different types of materials, the adhesion is likely to decrease at the interface between the metal terminal and the heat-sealable resin layer.

Thus, an adhesive film may be disposed between the metal terminal and the heat-sealable resin layer, for the purpose of improving the adhesion between these layers, for example. One example of this adhesive film is, for example, the adhesive film disclosed in Patent Literature 1.

### Citation List

### Patent Literature

Patent Literature 1: JP-A-2015-79638
Patent Literature 2: JP-A-2002-8616

### Summary of Invention

### Technical Problem

The adhesive film disposed between the metal terminal and the heat-sealable resin layer is required to be closely adhered between the power storage device packaging material and the metal terminal to hermetically seal a power storage device. For example, particularly high hermeticity is required for vehicle-mounted power storage devices.

The heat-sealable resin layer of the power storage device packaging material is typically formed of a polyolefin, such that the layer for forming the power storage device packaging material-facing surface of the adhesive film may be formed of the same polyolefin layer as the heat-sealable resin layer, so as to achieve high adhesion between these layers.

On the other hand, the metal terminal, which is formed of metal, typically does not have high adhesion to resin, whereas an acid-modified polyolefin has high adhesion to metal. Thus, the layer for forming the metal terminal-facing surface of the adhesive film may be formed of an acid-modified polyolefin layer, so as to achieve high adhesion between these layers.

That is, in order for the adhesive film for metal terminal to achieve particularly high adhesion between the power storage device packaging material and the metal terminal, the power storage device packaging material-facing surface of the adhesive film for metal terminal is preferably formed of a polyolefin layer, while the metal terminal-facing surface of the adhesive film for metal terminal is preferably formed of an acid-modified polyolefin layer.

However, the polyolefin layer side and the acid-modified polyolefin layer side of the adhesive film for metal terminal are indistinguishable from each other by their appearance. This may cause problems such as accidentally disposing the polyolefin layer side of the adhesive film for metal terminal on the metal terminal side, which may result in the adhesive film for metal terminal not being properly disposed to achieve high hermeticity.

Under such circumstances, it is a main object of the present disclosure to provide an adhesive film for metal terminal, which comprises a laminate comprising an acid-modified polyolefin layer for forming a metal terminal-facing surface and a polyolefin layer for forming a power storage device packaging material-facing surface, wherein the metal terminal-facing surface and the power storage device packaging material-facing surface are easily distinguishable from each other. It is also an object of the present disclosure to provide a method for producing the adhesive film for metal terminal, a metal terminal with the adhesive film for metal terminal, a power storage device, and a method for producing the power storage device.

### Solution to Problem

The inventors of the present disclosure have conducted extensive research to solve the aforementioned problem. As a result, they have found that when an adhesive film for metal terminal comprising a laminate comprising an acid-modified polyolefin layer for forming a metal terminal-facing surface and a polyolefin layer for forming a power storage device packaging material-facing surface is designed so that a ratio of arithmetic surface roughness RaA (µm) of the metal terminal-facing surface of the acid-modified polyolefin layer to arithmetic surface roughness RaB (µm) of the power storage device packaging material-facing surface of the polyolefin layer satisfies the relationship: RaA/RaB > 1.2, the metal terminal-facing surface and the power storage device packaging material-facing surface are easily distinguishable from each other. In the adhesive film for metal terminal of the present disclosure, the metal terminal-facing surface and the power storage device packaging material-facing surface are easily distinguishable from each other, such that the adhesive film for metal terminal can be properly disposed to achieve high hermeticity. The invention of the present disclosure has been completed as a result of further research based on this finding.

In summary, the present disclosure provides an aspect of the invention as set forth below:
An adhesive film for metal terminal, which is to be interposed between a metal terminal electrically connected to an electrode of a power storage device element and a power storage device packaging material for sealing the power storage device element,
wherein the adhesive film for metal terminal comprises a laminate comprising at least an acid-modified polyolefin layer for forming a metal terminal-facing surface and a polyolefin layer for forming a power storage device packaging material-facing surface, and
a ratio of arithmetic surface roughness RaA (µm) of the metal terminal-facing surface of the acid-modified polyolefin layer to arithmetic surface roughness RaB (µm) of the power storage device packaging material-facing surface of the polyolefin layer satisfies the relationship: RaA/RaB > 1.2.

### Advantageous Effects of Invention

According to the present disclosure, it is possible to provide an adhesive film for metal terminal, which comprises a laminate comprising an acid-modified polyolefin layer for forming a metal terminal-facing surface and a polyolefin layer for forming a power storage device packaging material-facing surface, wherein the metal terminal-facing surface and the power storage device packaging material-facing surface are easily distinguishable from each other. In the adhesive film for metal terminal of the present disclosure, the metal terminal-facing surface and the power storage device packaging material-facing surface are easily distinguishable from each other, such that the adhesive film for metal terminal can be properly disposed to achieve high hermeticity. It is also an object of the present disclosure to provide a method for producing the adhesive film for metal terminal, a metal terminal with the adhesive film for metal terminal, a power storage device, and a method for producing the power storage device.

### Brief Description of Drawings

FIG. 1 is a schematic plan view of a power storage device according to the present disclosure.
FIG. 2 is a schematic cross-sectional view taken along line A-A' in FIG. 1.
FIG. 3 is a schematic cross-sectional view taken along line B-B' in FIG. 1.
FIG. 4 is a schematic cross-sectional view of an adhesive film for metal terminal according to the present disclosure.
FIG. 5 is a schematic cross-sectional view of an adhesive film for metal terminal according to the present disclosure.
FIG. 6 is a schematic cross-sectional view of a power storage device packaging material according to the present disclosure.
FIG. 7 is a schematic diagram for illustrating a method of checking for formation of air bubbles in the example.

### Description of Embodiments

An adhesive film for metal terminal of the present disclosure is an adhesive film for metal terminal, which is to be interposed between a metal terminal electrically connected to an electrode of a power storage device element and a power storage device packaging material for sealing the power storage device element, wherein the adhesive film for metal terminal comprises a laminate comprising at least an acid-modified polyolefin layer for forming a metal terminal-facing surface and a polyolefin layer for forming a power storage device packaging material-facing surface, and a ratio of arithmetic surface roughness RaA (µm) of the metal terminal-facing surface of the acid-modified polyolefin layer to arithmetic surface roughness RaB (µm) of the power storage device packaging material-facing surface of the polyolefin layer satisfies the relationship: RaA/RaB > 1.2.

The adhesive film for metal terminal of the present disclosure comprises these features, such that the metal terminal-facing surface and the power storage device packaging material-facing surface of the adhesive film for metal terminal are easily distinguishable from each other by their appearance.

A power storage device of the present disclosure is a power storage device comprising a power storage device element comprising at least a positive electrode, a negative electrode, and an electrolyte; a power storage device packaging material for sealing the power storage device element; and a metal terminal electrically connected to each of the positive electrode and the negative electrode and protruding outside the power storage device, wherein the adhesive film for metal terminal of the present disclosure is interposed between the metal terminal and the power storage device packaging material.

Hereinafter, the adhesive film for metal terminal of the present disclosure and a method for producing the adhesive film for metal terminal, and a power storage device of the present disclosure and a method for producing the power storage device will be described in detail.

In the present specification, any numerical range indicated by "... to ..." is intended to mean "... or more" and "... or less". For example, the recitation "2 to 15 mm" is intended to mean 2 mm or more and 15 mm or less.

One method of identifying the MD of the adhesive film for metal terminal is to examine a sea-island structure by observing cross sections (for example, cross sections of the acid-modified polyolefin layer or the polyolefin layer) of the adhesive film for metal terminal with an electron microscope. In this method, the MD can be determined as the direction parallel to a cross section having the maximum average diameter of island shapes in the direction perpendicular to the thickness direction of the adhesive film for metal terminal. Specifically, the sea-island structure is examined by observing an electron microscope photograph for each of a cross section in the length direction of the adhesive film for metal terminal and cross sections (a total of 10 cross sections) while varying the angle by 10 degrees from the direction parallel to the cross section in the length direction to the direction perpendicular to the cross section in the length direction. Subsequently, for each cross section, the shape of each individual island is observed. In the shape of each individual island, the straight-line distance connecting the leftmost end in the direction perpendicular to the thickness direction of the adhesive film for metal terminal and the rightmost end in the perpendicular direction is defined as the diameter y. For each cross section, the average of the top 20 diameters y in decreasing order of the diameter y of the island shape is calculated. The MD is determined as the direction parallel to a cross section having the highest average of the diameter y of the island shape. Alternatively, the MD can be identified by, for example, measuring the heat shrink ratio of the adhesive film for metal terminal after being left in a 150°C environment for 2 minutes, and determining the direction with a higher shrink ratio as the MD.

### 1. Adhesive Film for Metal Terminal

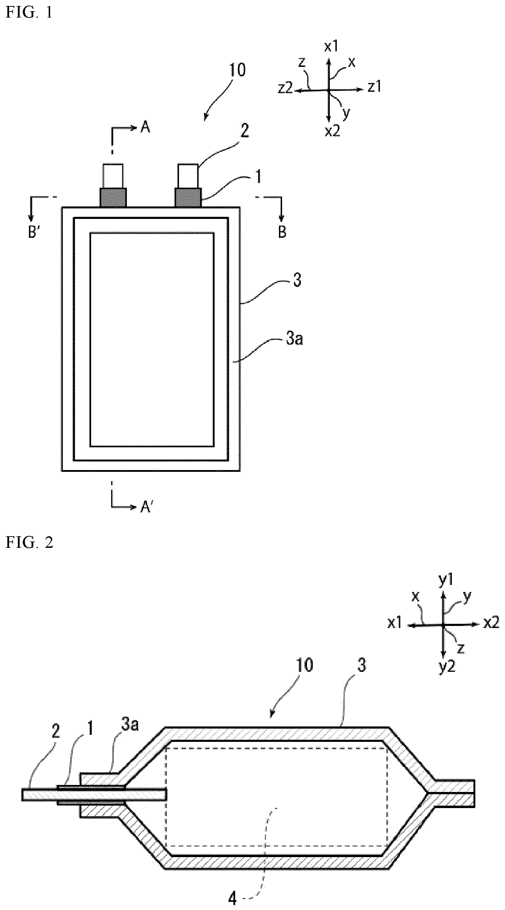

An adhesive film for metal terminal of the present disclosure is interposed between a metal terminal electrically connected to an electrode of a power storage device element and a power storage device packaging material for sealing the power storage device element. Specifically, as shown in FIGS. 1 to 3, for example, an adhesive film 1 for metal terminal according to the present disclosure is interposed between a metal terminal 2, which is electrically connected to an electrode of a power storage device element 4, and a power storage device packaging material 3 for sealing the power storage device element 4. The metal terminal 2 protrudes outside the power storage device packaging material 3, and is sandwiched between the power storage device packaging materials 3 with the adhesive film 1 for metal terminal interposed therebetween, in a peripheral region 3a of the power storage device packaging materials 3 that have been heat-sealed.

In the present disclosure, a temporary bonding process for bonding the adhesive film for metal terminal to the metal terminal is performed, for example, about three to six times at a temperature of about 140 to 160°C and a pressure of about 0.01 to 1.0 MPa for a time of about 3 to 15 seconds. A permanent bonding process is performed, for example, about one to three times at a temperature of about 160 to 240°C and a pressure of about 0.01 to 1.0 MPa for a time of about 3 to 15 seconds. Heat-sealing of the power storage device packaging materials with the metal terminal with the adhesive film for metal terminal interposed therebetween is typically performed about once at a heating temperature of about 180 to 210°C and a pressure of about 1.0 to 2.0 MPa for a time of about 1 to 5 seconds.

The adhesive film 1 for metal terminal of the present disclosure is provided to improve the adhesion between the metal terminal 2 and the power storage device packaging material 3. The hermeticity of the power storage device element 4 is improved by improving the adhesion between the metal terminal 2 and the power storage device packaging material 3. As described above, during heat-sealing of the power storage device element 4, the power storage device element is sealed in such a manner that the metal terminal 2 electrically connected to an electrode of the power storage device element 4 protrudes outside the power storage device packaging material 3. Here, if the adhesive film is not used, the hermeticity of the power storage device element is likely to decrease at the interface between the metal terminal 2 and a heat-sealable resin layer 35, because the metal terminal 2 formed of metal and the heat-sealable resin layer 35 (layer formed of a heat-sealable resin, such as a polyolefin) positioned as the innermost layer of the power storage device packaging material 3 are formed of different types of materials.

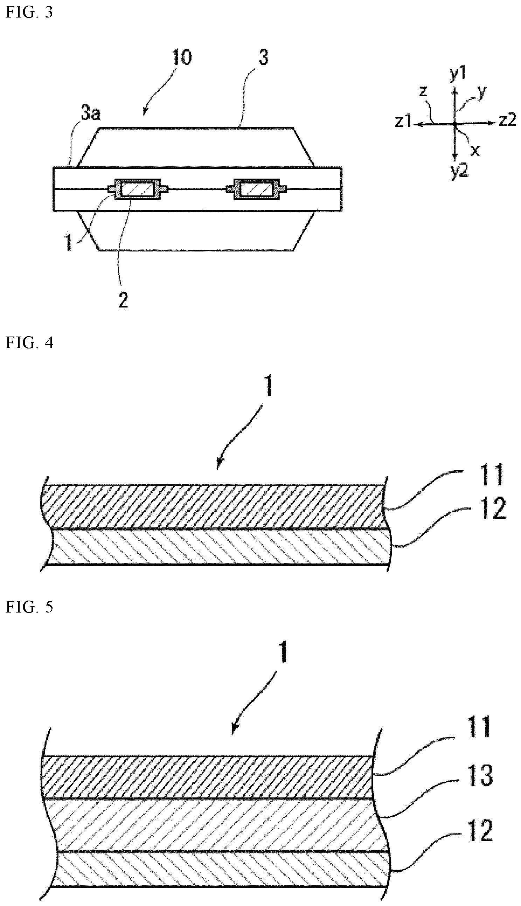

As shown in FIG. 4, the adhesive film 1 for metal terminal of the present disclosure includes a structure in which at least an acid-modified polyolefin layer 11 and a polyolefin layer 12 are laminated. The acid-modified polyolefin layer 11 is disposed on the metal terminal 2 side. The polyolefin layer 12 is disposed on the power storage device packaging material 3 side. In the adhesive film 1 for metal terminal of the present disclosure, the acid-modified polyolefin layer 11 and the polyolefin layer 12 are positioned on both surfaces. Each of the acid-modified polyolefin layer 11, an intermediate layer 13, and the polyolefin layer 12 may be formed of a single layer, or may be formed of multiple layers. Each of the acid-modified polyolefin layer 11, the intermediate layer 13, and the polyolefin layer 12 may also contain a colorant. When each of the acid-modified polyolefin layer 11, the intermediate layer 13, and the polyolefin layer 12 is formed of multiple layers, at least one of the layers may contain a colorant. In a pre-sealing process for welding the adhesive film 1 for metal terminal to the metal terminal, heat produced by the pre-sealing may cause the colorant in the innermost layer (the layer to be welded to the metal terminal) to flow out, making it difficult to control the welding position with a positioning sensor or the like. This is particularly likely to occur when the process includes preheating the metal terminal. In the adhesive film 1 for metal terminal, adding a colorant to a layer positioned more toward the inside than the outermost layer of the adhesive film 1 for metal terminal can prevent outflow of the colorant and facilitates control of the welding position.

In view of more satisfactorily achieving the effects of the invention of the present disclosure, the intermediate layer 13 is preferably laminated between the acid-modified polyolefin layer 11 and the polyolefin layer 12, as shown in FIG. 5. Also preferably, the acid-modified polyolefin layer 11 and the intermediate layer 13 are in surface contact with each other, and the polyolefin layer 12 and the intermediate layer 13 are in surface contact with each other.

In the adhesive film 1 for metal terminal of the present disclosure, each of the acid-modified polyolefin layer 11 and the polyolefin layer 12 is a layer containing a polyolefin-based resin. The acid-modified polyolefin layer 11 contains an acid-modified polyolefin among polyolefin-based resins, and is preferably a layer formed of an acid-modified polyolefin. The polyolefin layer 12 contains a polyolefin among polyolefin-based resins, and is preferably a layer formed of a polyolefin.

The intermediate layer 13 preferably contains a polyolefin-based resin (i.e., has a polyolefin backbone), more preferably contains a polyolefin, and still more preferably is a layer formed of a polyolefin.

In each of the acid-modified polyolefin layer 11, the polyolefin layer 12, and the optional intermediate layer 13, the polyolefin is preferably polypropylene, and the acid-modified polyolefin is preferably acid-modified polypropylene. Each of the polyolefin and the acid-modified polyolefin may contain known additives, and pigments and fillers as described below.

Specific examples of preferred laminated structures of the adhesive film 1 for metal terminal of the present disclosure include a two-layer structure in which an acid-modified polyolefin layer formed of acid-modified polypropylene/a polyolefin layer formed of polypropylene are laminated; and a three-layer structure in which an acid-modified polyolefin layer formed of acid-modified polypropylene/an intermediate layer formed of polypropylene/a polyolefin layer formed of polypropylene are laminated in this order. Of these laminated structures, a three-layer structure is particularly preferred in view of adhesiveness between the polyolefin layer 12 and the heat-sealable resin layer 35 of the power storage device packaging material 3.

Each of the acid-modified polyolefin layer 11, the polyolefin layer 12, and the optional intermediate layer 13 will be described in detail below.

When the adhesive film 1 for metal terminal of the present disclosure is disposed between the power storage device packaging material 3 and the metal terminal 2 of the power storage device 10, the surface of the metal terminal 2 formed of metal and the heat-sealable resin layer 35 (layer formed of a heat-sealable resin, such as a polyolefin) of the power storage device packaging material 3 are bonded to each other, with the adhesive film 1 for metal terminal interposed therebetween. The acid-modified polyolefin layer 11 of the adhesive film 1 for metal terminal is disposed on the metal terminal 2 side, and the polyolefin layer 12 is disposed on the power storage device packaging material 3 side, such that the acid-modified polyolefin layer 11 is closely adhered to the metal terminal 2, and the polyolefin layer 12 is closely adhered to the heat-sealable resin layer 35 of the power storage device packaging material 3.

The laminate forming the adhesive film 1 for metal terminal of the present disclosure has a thickness (entire thickness) of, for example, about 50 µm or more, preferably about 60 µm or more, more preferably about 80 µm or more, still more preferably about 100 µm or more, particularly preferably about 120 µm or more. On the other hand, the entire thickness of the adhesive film 1 for metal terminal of the present disclosure is preferably about 500 µm or less, more preferably about 300 µm or less, still more preferably about 250 µm or less, even more preferably about 200 µm or less, and still more preferably about 180 µm or less. Preferred ranges of the entire thickness of the adhesive film 1 for metal terminal of the present disclosure include from about 50 to 500 µm, from about 50 to 300 µm, from about 50 to 250 µm, from about 50 to 200 µm, from about 50 to 180 µm, from about 60 to 500 µm, from about 60 to 300 µm, from about 60 to 250 µm, from about 60 to 200 µm, from about 60 to 180 µm, from about 80 to 500 µm, from about 80 to 300 µm, from about 80 to 250 µm, from about 80 to 200 µm, from about 80 to 180 µm, from about 100 to 500 µm, from about 100 to 300 µm, from about 100 to 250 µm, from about 100 to 200 µm, from about 100 to 180 µm, from about 120 to 500 µm, from about 120 to 300 µm, from about 120 to 250 µm, from about 120 to 200 µm, and from about 120 to 180 µm. In particular, setting the thickness (entire thickness) of the laminate forming the adhesive film 1 for metal terminal to 120 µm or more can ensure a sufficient thickness of the adhesive film 1 for metal terminal and satisfactorily prevent formation of air bubbles at the interface between the adhesive film for metal terminal and the metal terminal.

Hereinafter, materials forming the acid-modified polyolefin layer 11, the polyolefin layer 12, and the intermediate layer 13, thicknesses of these layers, and the like will be described in detail.

### [Acid-Modified Polyolefin Layer 11 and Polyolefin Layer 12]

As shown in FIGS. 4 and 5, the adhesive film 1 for metal terminal of the present disclosure includes the acid-modified polyolefin layer 11 on one surface and the polyolefin layer 12 on the other surface. The acid-modified polyolefin layer 11 is disposed on the metal terminal 2 side. The polyolefin layer 12 is disposed on the power storage device packaging material 3 side. In the adhesive film 1 for metal terminal of the present disclosure, the acid-modified polyolefin layer 11 and the polyolefin layer 12 are positioned on both surfaces.

In the present disclosure, the ratio of arithmetic surface roughness RaA (µm) of the metal terminal-facing surface of the acid-modified polyolefin layer 11 to arithmetic surface roughness RaB (µm) of the power storage device packaging material-facing surface of the polyolefin layer 12 satisfies the relationship: RaA/RaB > 1.2. Because of this relationship, the metal terminal-facing surface and the power storage device packaging material-facing surface are easily distinguishable from each other in the power storage device packaging material 3 of the present disclosure. The arithmetic surface roughness RaA (µm) of the acid-modified polyolefin layer 11 and the arithmetic surface roughness RaB (µm) of the polyolefin layer 12 can each be adjusted, during cooling and solidification of the resin after being melt-extruded, by pressing the resin against a cooling roll with a surface having fine unevenness to transfer the surface shape to the resin. That is, the arithmetic surface roughness RaA (µm) of the acid-modified polyolefin layer 11 and the arithmetic surface roughness RaB (µm) of the polyolefin layer 12 can be adjusted to satisfy the above-defined relationship, using the surface roughness of each cooling roll. Alternatively, the adjustment can be made using the so-called chemical embossing technique. Chemical embossing is a technique of forming a film from a blend of resins with different melting points and shrink ratios, and imparting unevenness by utilizing fine phase-separation that occurs during cooling and solidification. Alternatively, the adjustment can be made by adding a blowing agent, a large inorganic filler, or the like.

In view of more satisfactorily achieving the effects of the invention of the present disclosure, the RaA/RaB ratio is desirably greater, preferably about 1.5 or more, and more preferably about 2.0 or more. The upper limit of the ratio is, for example, about 5.0. Preferred ranges of the ratio include from about 1.2 to 5.0, from about 1.5 to 5.0, and from about 2.0 to 5.0.

In the present disclosure, the method of satisfying the relationship RaA/RaB > 1.2 for the ratio of arithmetic surface roughness RaA (µm) of the metal terminal-facing surface of the acid-modified polyolefin layer 11 to arithmetic surface roughness RaB (µm) of the power storage device packaging material-facing surface of the polyolefin layer 12 is not specifically limited; for example, as described above, the acid-modified polyolefin layer 11 and the polyolefin layer 12 with the predetermined arithmetic surface roughnesses can be formed by using a cooling roll with a predetermined surface roughness during the formation of each of the acid-modified polyolefin layer 11 and the polyolefin layer 12 by melt extrusion, to press the surface of the cooling roll against the surface of each of the acid-modified polyolefin layer 11 and the polyolefin layer 12. In this case, cooling rolls with different surface shapes are used to form the acid-modified polyolefin layer 11 and the polyolefin layer 12.

The reason why the arithmetic surface roughness RaA of the metal terminal-facing surface of the acid-modified polyolefin layer 11 is greater than the arithmetic surface roughness RaB (µm) of the power storage device packaging material-facing surface of the polyolefin layer 12 is that this facilitates peeling off the acid-modified polyolefin layer 11 from the cooling roll during the production process of the acid-modified polyolefin layer 11. More specifically, when the acid-modified polyolefin is melt-extruded and then nipped with the cooling roll (metal roll), the acid-modified polyolefin layer 11 is difficult to peel off from the cooling roll because of the adhesion of the acid-modified polyolefin to metal. Thus, setting the arithmetic surface roughness RaA of the metal terminal-facing surface of the acid-modified polyolefin layer 11 to be greater (i.e., reducing the area of contact of the metal terminal-facing surface of the acid-modified polyolefin layer 11 with the cooling roll) facilitates peeling off the acid-modified polyolefin layer 11 from the cooling roll. Furthermore, when the adhesive film for metal terminal has moderate surface roughness during heat-sealing to the metal terminal, formation of air bubbles at the interface between the adhesive film for metal terminal and the metal terminal can be prevented. The formation of air bubbles can lead to problems such as decreased sealing strength, retention of the electrolytic solution, and defects in external appearance.

In view of more satisfactorily achieving the effects of the invention of the present disclosure, the arithmetic surface roughness RaA (µm) of the metal terminal-facing surface of the acid-modified polyolefin layer 11 is preferably about 15 µm or less, more preferably about 5 µm or less, and still more preferably about 1.0 µm or less, while it is preferably about 0.4 µm or more, more preferably about 0.5 µm, and still more preferably about 0.7 µm or more. Preferred ranges include from about 0.4 to 15 µm, from about 0.4 to 5 µm, from about 0.4 to 1.0 µm, from about 0.5 to 15 µm, from about 0.5 to 5 µm, from about 0.5 to 1.0 µm, from about 0.7 to 15 µm, from about 0.7 to 5 µm, and from about 0.7 to 1.0 µm. Setting the arithmetic surface roughness RaA (µm) of the metal terminal-facing surface of the acid-modified polyolefin layer 11 to 0.4 µm or more facilitates reducing the dynamic friction coefficient of the metal terminal-facing surface of the acid-modified polyolefin layer 11. Setting the RaA to 0.4 µm or more can also reduce friction on the surface of the acid-modified polyolefin layer 11 without the addition of a lubricant. This has the effect of allowing the acid-modified polyolefin layer 11 to follow the shape of the metal terminal to make it less likely for air bubbles to remain, as well as the effect of providing an escape route for the air when the acid-modified polyolefin layer 11 abuts the metal terminal surface, such that air bubbles tend not to remain. Addition of a lubricant to the acid-modified polyolefin layer 11 is not preferred because this may result in bleeding out of the lubricant on the surface of the acid-modified polyolefin layer 11, adversely affecting the seal between the acid-modified polyolefin layer 11 and the metal terminal. On the other hand, setting the RaA (µm) to 15 µm or less can satisfactorily prevent formation of air bubbles at the interface between the adhesive film for metal terminal and the metal terminal. The arithmetic surface roughness RaB (µm) of the power storage device packaging material-facing surface of the polyolefin layer 12 is preferably about 0.6 µm or less, and more preferably about 0.4 µm or less, while it is preferably about 0.1 µm or more, and more preferably about 0.3 µm or more. Preferred ranges include from about 0.1 to 0.6 µm, from about 0.1 to 0.4 µm, from about 0.3 to 0.6 µm, and from about 0.3 to 0.4 µm. Setting the arithmetic surface roughness RaB (µm) of the power storage device packaging material-facing surface of the polyolefin layer 12 to 0.1 µm or more can improve slipperiness of the polyolefin layer 12 immediately after the film is formed. Setting the RaB (µm) to 0.6 µm or less can make the metal terminal-facing surface and the power storage device packaging material-facing surface more easily distinguishable from each other. The method of measuring the arithmetic surface roughness RaA, RaB is as follows:

### <Arithmetic Surface Roughness Ra>

For the adhesive film for metal terminal, the arithmetic surface roughness RaA (µm) of the metal terminal-facing surface of the acid-modified polyolefin layer and the arithmetic surface roughness RaB (µm) of the power storage device packaging material-facing surface of the polyolefin layer are each measured using a commercial optical surface profiler (New View 7300 manufactured by Zygo Corporation).

In view of more satisfactorily achieving the effects of the invention of the present disclosure, the metal terminal-facing surface of the acid-modified polyolefin layer 11 preferably has a gloss GuA (GU) of about 1 GU or more, more preferably about 5 GU or more, as measured at an incidence angle of 60°, while the gloss GuA (GU) is preferably about 15 GU or less, and more preferably about 10 GU or less. Preferred ranges include from about 1 to 15 GU, from about 1 to 10 GU, from about 5 to 15 GU, and from about 5 to 10 GU. The power storage device packaging material-facing surface of the polyolefin layer 12 preferably has a gloss GuB (GU) of about 15 GU or more, more preferably about 30 GU or more, as measured at an incidence angle of 60°, while the gloss GuB (GU) is preferably about 100 GU or less, and more preferably about 80 GU or less. Preferred ranges include from about 15 to 100 GU, from about 15 to 80 GU, from about 30 to 100 GU, and from about 30 to 80 GU. The gloss GuA of the acid-modified polyolefin layer 11 and the gloss GuB of the polyolefin layer 12 can each be adjusted, during cooling and solidification of the resin after being melt-extruded, by pressing the resin against a cooling roll with a surface having fine unevenness to transfer the surface shape to the resin. That is, the gloss GuA of the acid-modified polyolefin layer 11 and the gloss GuB of the polyolefin layer 12 can be adjusted using the surface roughness of each cooling roll. The method of measuring the gloss GuA, GuB is as follows:

### <Gloss (GU Value)>

A Gu value is measured according to JIS Z 8741: 1997, using a commercial gloss meter at an incidence angle of 60° of light with respect to the metal terminal-facing surface or the power storage device packaging material-facing surface of the adhesive film for metal terminal, and the observed Gu value is determined as the gloss. The average value of the measurements, n = 5, is adopted.

In view of more satisfactorily achieving the effects of the invention of the present disclosure, the metal terminal-facing surface of the acid-modified polyolefin layer 11 preferably has a dynamic friction coefficient µA of about 0.1 or more, more preferably about 0.2 or more, as measured in accordance with the conditions in 8.1 Film to Film of JIS K 7125: 1999, while the dynamic friction coefficient µA is preferably about 0.7 or less, and more preferably about 0.5 or less. Preferred ranges include from about 0.1 to 0.7, from about 0.1 to 0.5, from about 0.2 to 0.7, and from about 0.2 to 0.5. The power storage device packaging material-facing surface of the polyolefin layer 12 preferably has a dynamic friction coefficient µB of about 0.1 or more, more preferably about 0.2 or more, as measured in accordance with the conditions in 8.1 Film to Film of JIS K 7125: 1999, while the dynamic friction coefficient µB is preferably about 0.7 or less, and more preferably about 0.5 or less. Preferred ranges include from about 0.1 to 0.7, from about 0.1 to 0.5, from about 0.2 to 0.7, and from about 0.2 to 0.5. The dynamic friction coefficient µA of the acid-modified polyolefin layer 11 and the dynamic friction coefficient µB of the polyolefin layer 12 can each be adjusted, during cooling and solidification of the resin after being melt-extruded, by pressing the resin against a cooling roll with a surface having fine unevenness to transfer the surface shape to the resin, or can be adjusted with a lubricant. That is, the dynamic friction coefficient µA of the acid-modified polyolefin layer 11 and the dynamic friction coefficient µB of the polyolefin layer 12 can be adjusted using the surface roughness of each cooling roll, or using a lubricant. The method of measuring the dynamic friction coefficient µA, µB is as follows:

### <Dynamic Friction Coefficient>

A friction test is performed using the method according to 8.1 Film to Film Measurement of JIS K 7125: 1999. First, the power storage device packaging material is cut into two sheets of samples with a size of 80 mm in the TD direction × 200 mm in the MD direction. Next, for measurement of the dynamic friction coefficient µA of the metal terminal-facing surface of the acid-modified polyolefin layer, the samples are placed on each other with the metal terminal-facing surfaces of the acid-modified polyolefin layers facing each other, and a sliding piece is placed on the samples. The bottom of the sliding piece is covered with rubber. The sliding piece has a total mass of 200 g. The samples and the sliding piece are brought in close contact to avoid slippage. Next, the sliding piece is pulled at a speed of 100 mm/min, the dynamic friction force (N) between the two samples is measured, and the dynamic friction force is divided by the normal force (1.96 N) of the sliding piece to calculate the dynamic friction coefficient µA. To calculate the dynamic friction coefficient µB of the power storage device packaging material-facing surface of the polyolefin layer, the samples are placed on each other with the power storage device packaging material-facing surfaces of the polyolefin layers facing each other, and then the test is performed. The dynamic friction coefficient is determined from the average value of measurements up to the initial 30 mm after the beginning of relative shear movement between the contacting surfaces, ignoring the peak static friction force. The load cell is directly connected to the sliding piece.

In the adhesive film 1 for metal terminal of the present disclosure, each of the acid-modified polyolefin layer 11 and the polyolefin layer 12 is a layer containing a polyolefin-based resin. The acid-modified polyolefin layer 11 contains an acid-modified polyolefin among polyolefin-based resins, and is preferably a layer formed of an acid-modified polyolefin. The polyolefin layer 12 contains a polyolefin among polyolefin-based resins, and is preferably a layer formed of a polyolefin. While an acid-modified polyolefin has significantly higher affinity for metals as compared to polyolefins, its affinity for polyolefins is typically slightly lower than the affinity between polyolefins. Thus, disposing the acid-modified polyolefin layer 11 on the metal terminal 2 side in the adhesive film 1 for metal terminal of the present disclosure can achieve excellent adhesion at the interface between the metal terminal 2 and the adhesive film 1 for metal terminal. On the other hand, disposing the polyolefin layer 12 on the heat-sealable resin layer 35 side of the power storage device packaging material 3 can achieve even superior adhesion at the interface between the adhesive film 1 for metal terminal and the heat-sealable resin layer 35.

Specific examples of preferred laminated structures of the adhesive film 1 for metal terminal of the present disclosure include a two-layer structure in which an acid-modified polyolefin layer formed of acid-modified polypropylene/a polyolefin layer formed of polypropylene are laminated; and a three-layer structure in which an acid-modified polyolefin layer formed of acid-modified polypropylene/an intermediate layer formed of polypropylene/a polyolefin layer formed of polypropylene are laminated in this order. Of these laminated structures, a three-layer structure is particularly preferred.

While the acid-modified polyolefin is not specifically limited as long as it is a polyolefin modified with an acid, it is preferably a polyolefin grafted with an unsaturated carboxylic acid or an anhydride thereof.

Examples of polyolefins in each of the acid-modified polyolefin layer 11 and the polyolefin layer 12 (acid-modified polyolefins for the acid-modified polyolefin layer 11) include polyethylenes, such as low-density polyethylene, medium-density polyethylene, high-density polyethylene, and linear low-density polyethylene; crystalline or amorphous polypropylenes, such as homopolypropylene, block copolymers of polypropylene (for example, block copolymers of propylene and ethylene), and random copolymers of polypropylene (for example, random copolymers of propylene and ethylene and random copolymers of propylene and butene); and terpolymers of ethylene-butene-propylene. Preferred among these polyolefins are a polyethylene and a polypropylene, and particularly preferred is a polypropylene. Preferred among polypropylenes is random polypropylene (i.e., a random copolymer of polypropylene (for example, a random copolymer of propylene and ethylene)). For example, the acid-modified polyolefin layer 11 preferably contains acid-modified random polypropylene, and more preferably is formed of acid-modified random polypropylene. The polyolefin layer 12 preferably contains random polypropylene, and more preferably is formed of random polypropylene.

The polyolefin may also be a cyclic polyolefin. For example, a carboxylic acid-modified cyclic polyolefin is a polymer obtained by replacing a portion of the monomers forming the cyclic polyolefin with an α,β-unsaturated carboxylic acid or an anhydride thereof and copolymerizing them, or by block-polymerizing or graft-polymerizing an α,β-unsaturated carboxylic acid or an anhydride thereof onto the cyclic polyolefin.

The cyclic polyolefin is a copolymer of an olefin and a cyclic monomer. Examples of the olefin as a constituent monomer of the cyclic polyolefin include ethylene, propylene, 4-methyl-1-pentene, butadiene, and isoprene. Examples of the cyclic monomer as a constituent monomer of the cyclic polyolefin include cyclic alkenes, such as norbornene; specifically, cyclic dienes, such as cyclopentadiene, dicyclopentadiene, cyclohexadiene, and norbornadiene. Preferred among these polyolefins are cyclic alkenes, and more preferred is norbornene. Examples of constituent monomers also include styrene.

Examples of the carboxylic acid or anhydride thereof to be used for the acid modification include maleic acid, acrylic acid, itaconic acid, crotonic acid, maleic anhydride, and itaconic anhydride. Preferably, when the acid-modified polyolefin layer 11 is analyzed by infrared spectroscopy, a peak derived from maleic anhydride is detected. For example, when a maleic anhydride-modified polyolefin is measured by infrared spectroscopy, peaks derived from maleic anhydride are detected at a wavelength of around 1760 cm⁻¹ and a wavelength of around 1780 cm⁻¹. That is, in this case, when the acid-modified polyolefin layer 11 is measured by infrared spectroscopy, peaks derived from maleic anhydride are detected. However, if the degree of acid modification is low, the peaks may be so small that they cannot be detected. In that case, the analysis can be performed by nuclear magnetic resonance spectroscopy.

Each of the acid-modified polyolefin layer 11 and the polyolefin layer 12 may be formed with one resin component alone, or may be formed with a blend polymer obtained by combining two or more resin components. Furthermore, each of the acid-modified polyolefin layer 11 and the polyolefin layer 12 may be formed of only one layer, or may be formed of two or more layers with the same resin component or different resin components. In view of film formability of the acid-modified polyolefin layer 11 and the polyolefin layer 12, each of these layers is preferably formed with a blend polymer obtained by combining two or more resin components. When a blend polymer is used to form the acid-modified polyolefin layer 11, the blend polymer preferably contains acid-modified polypropylene as a main component (component that constitutes 50% by mass or more) and 50% by mass or less of another resin (preferably polyethylene in view of improving flexibility). When a blend polymer is used to form the polyolefin layer 12, the blend polymer preferably contains polypropylene as a main component (component that constitutes 50% by mass or more) and 50% by mass or less of another resin (preferably polyethylene in view of improving flexibility). On the other hand, in view of electrolytic solution resistance of the acid-modified polyolefin layer 11 and the polyolefin layer 12, the acid-modified polyolefin layer 11 preferably contains acid-modified polypropylene alone as the resin, and the polyolefin layer 12 preferably contains polypropylene alone as the resin.

In view of further improving the hermeticity of the power storage device, in the present disclosure, preferably, the resin forming the heat-sealable resin layer of the power storage device packaging material is identical to the resin forming the polyolefin layer 12. More specifically, each of the resin forming the heat-sealable resin layer 35 and the polyolefin layer 12 is preferably a polyolefin, more preferably polypropylene, and still more preferably random polypropylene. This leads to particularly high adhesion between the heat-sealable resin layer 35 and the polyolefin layer 12.

Each of the acid-modified polyolefin layer 11 and the polyolefin layer 12 may also optionally contain a colorant such as a pigment. Various inorganic pigments may be used as the pigment. The pigment is preferably at least one of a black pigment and a white pigment. Specific examples of preferred pigments include carbon (carbon and graphite) mentioned below as the filler, black pigments, such as titanium nitride, and white pigments, such as titanium oxide. Carbon (carbon and graphite), which is a material commonly used inside a power storage device, does not have the possibility of dissolving into an electrolytic solution, and thus, is suitable for addition to the acid-modified polyolefin layer 11 positioned on the metal terminal side. Moreover, carbon (carbon and graphite) has a high coloring effect and thus can achieve a sufficient coloring effect when added only in an amount that does not impair adhesiveness, and also does not melt by heat and thus can increase the apparent melt viscosity of the blended resin. Furthermore, carbon (carbon and graphite) can prevent, during thermal bonding (heat sealing), thinning of the region to which pressure is applied, thereby imparting high hermeticity between the power storage device packaging material and the metal terminal.

The pigment content in a layer containing the pigment is, for example, about 0.05 to 5.00% by mass. When the acid-modified polyolefin layer 11 and the polyolefin layer 12 contain a pigment, the pigment content in each layer is, for example, about 0.05 to 5.00% by mass. Addition of a pigment to only one of the acid-modified polyolefin layer 11 and the polyolefin layer 12 (preferably only the acid-modified polyolefin layer 11) can make the metal terminal-facing surface and the power storage device packaging material-facing surface more easily distinguishable from each other. When both a filler and a pigment are to be added to the power storage device packaging material 3, the filler and the pigment may be added to the identical acid-modified polyolefin layer 11 or polyolefin layer 12; however, in view of avoiding impairment of the heat sealability of the adhesive film 1 for metal terminal, it is preferred to add the filler and the pigment to each of the acid-modified polyolefin layer 11 and the polyolefin layer 12 separately.

Each of the acid-modified polyolefin layer 11 and the polyolefin layer 12 may further optionally contain a filler. When the acid-modified polyolefin layer 11 and the polyolefin layer 12 contain a filler, the filler functions as a spacer, which can effectively prevent a short circuit between the metal terminal 2 and a barrier layer 33 of the power storage device packaging material 3. The filler has a particle diameter of about 0.1 to 35 µm, preferably about 5.0 to 30 µm, more preferably about 10 to 25 µm. The amount of the filler contained per 100 parts by mass of the resin component forming each of the acid-modified polyolefin layer 11 and the polyolefin layer 12 is about 5 to 30 parts by mass, and preferably about 10 to 20 parts by mass.

The filler may be either inorganic or organic. Examples of inorganic fillers include carbon (carbon and graphite), silica, aluminum oxide, barium titanate, iron oxide, silicon carbide, zirconium oxide, zirconium silicate, magnesium oxide, titanium oxide, calcium aluminate, calcium hydroxide, aluminum hydroxide, magnesium hydroxide, and calcium carbonate. Examples of organic fillers include fluororesins, phenol resins, urea resins, epoxy resins, acrylic resins, benzoguanamine-formaldehyde condensate, melamine-formaldehyde condensate, crosslinked polymethyl methacrylate, and crosslinked polyethylene. In view of shape stability, rigidity, and contents resistance, aluminum oxide, silica, fluororesins, acrylic resins, and benzoguanamine-formaldehyde condensate are preferred; in particular, spherical aluminum oxide and silica are more preferred. Examples of usable methods of mixing the filler into the resin component forming each of the acid-modified polyolefin layer 11 and the polyolefin layer 12 include a method in which both components are melt-blended beforehand in a Banbury mixer or the like to form a masterbatch, which is adjusted to a predetermined mixture ratio; and a method in which the filler is directly mixed into the resin component.

In view of more satisfactorily achieving the effects of the present disclosure, each of the acid-modified polyolefin layer 11 and the polyolefin layer 12 preferably has a thickness of about 10 µm or more, more preferably about 15 µm or more, still more preferably about 20 µm or more, while having a thickness of 120 µm or less, more preferably 100 µm or less, still more preferably 80 µm or less, even more preferably about 60 µm or less, still more preferably about 55 µm or less, even more preferably 50 µm or less. Preferred ranges of the thickness of each of the acid-modified polyolefin layer 11 and the polyolefin layer 12 include from about 10 to 120 µm, from about 10 to 100 µm, from about 10 to 80 µm, from about 10 to 60 µm, from about 10 to 55 µm, from about 10 to 50 µm, from about 15 to 120 µm, from about 15 to 100 µm, from about 15 to 80 µm, from about 15 to 60 µm, from about 15 to 55 µm, from about 15 to 50 µm, from about 20 to 120 µm, from about 20 to 100 µm, from about 20 to 80 µm, from about 20 to 60 µm, from about 20 to 55 µm, and from about 20 to 50 µm. More specifically, for example, when the adhesive film 1 for metal terminal of the present disclosure is used for a consumer-oriented power storage device, the thickness of each of the acid-modified polyolefin layer 11 and the polyolefin layer 12 is preferably about 10 to 30 µm; and when the adhesive film 1 for metal terminal of the present disclosure is used for a vehicle-mounted power storage device, the thickness of each layer is preferably about 30 to 120 µm.

Preferably, the thickness of the acid-modified polyolefin layer 11 is greater than the thickness of the polyolefin layer 12. That is, the adhesive film 1 for metal terminal preferably satisfies the relationship: the thickness of the acid-modified polyolefin layer > the thickness of the polyolefin layer. When the adhesive film 1 for metal terminal satisfies this relationship, a region surrounding the metal terminal can be easily filled with the acid-modified polyolefin layer, which improves the hermeticity and insulation properties of the region surrounding the metal terminal. On the other hand, when the adhesive film 1 for metal terminal satisfies the relationship: the thickness of the acid-modified polyolefin layer < the thickness of the polyolefin layer, the sealing strength between the polyolefin layer and the power storage device packaging material can be improved, which improves the hermeticity and impact resistance of the power storage device packaging material.

In view of improving the hermeticity of the power storage device of the present disclosure, at least one of the acid-modified polyolefin layer 11 and the polyolefin layer 12 preferably contains a lubricant. The lubricant concentration is preferably 1500 ppm or less, and more preferably 1000 ppm or less, while it is preferably 200 ppm or more, and more preferably 500 ppm or more. Preferred ranges include from about 200 to 1500 ppm, from about 200 to 1000 ppm, from about 500 to 1500 ppm, and from about 500 to 1000 ppm.

While the lubricant is not specifically limited, it is preferably an amide-based lubricant. Specific examples of amide-based lubricants include saturated fatty acid amides, unsaturated fatty acid amides, substituted amides, methylol amides, saturated fatty acid bis-amides, unsaturated fatty acid bis-amides, fatty acid ester amides, and aromatic bis-amides. Specific examples of saturated fatty acid amides include lauramide, palmitamide, stearamide, behenamide, and hydroxystearamide. Specific examples of unsaturated fatty acid amides include oleamide and erucamide. Specific examples of substituted amides include N-oleyl palmitamide, N-stearyl stearamide, N-stearyl oleamide, N-oleyl stearamide, and N-stearyl erucamide. Specific examples of methylol amides include methylol stearamide. Specific examples of saturated fatty acid bis-amides include methylene-bis-stearamide, ethylene-bis-capramide, ethylene-bis-lauramide, ethylene-bis-stearamide, ethylene-bis-hydroxystearamide, ethylene-bis-behenamide, hexam ethylene-bis-stearamide, hexamethylene-bis-behenamide, hexamethylene hydroxystearamide, N,N'-distearyl adipamide, and N,N'-distearyl sebacamide. Specific examples of unsaturated fatty acid bis-amides include ethylene-bis-oleamide, ethylene-bis-erucamide, hexamethylene-bis-oleamide, N,N'-dioleyl adipamide, and N,N'-dioleyl sebacamide. Specific examples of fatty acid ester amides include stearamide ethyl stearate. Specific examples of aromatic bis-amides include m-xylylene-bis-stearamide, m-xylylene-bis-hydroxystearamide, and N,N'-distearyl isophthalamide. These lubricants may be used alone or in combination.

### [Intermediate Layer 13]

In the adhesive film 1 for metal terminal, the intermediate layer 13 is an optional layer, which functions as a support of the adhesive film 1 for metal terminal.

The material forming the intermediate layer 13 is not specifically limited. Examples of the material forming the intermediate layer 13 include polyolefin-based resins, polyamide-based resins, polyester-based resins, epoxy resins, acrylic resins, fluororesins, silicone resins, phenol resins, polyetherimides, polyimides, polycarbonates, and mixtures or copolymers thereof, with polyolefin-based resins being particularly preferred among these. That is, the material forming the intermediate layer 13 is preferably a resin containing a polyolefin backbone, such as a polyolefin or an acid-modified polyolefin. The inclusion of a polyolefin backbone in the resin forming the intermediate layer 13 can be analyzed by, for example, infrared spectroscopy or gas chromatography-mass spectrometry.

As described above, the intermediate layer 13 preferably contains a polyolefin-based resin, more preferably contains a polyolefin, and still more preferably is a layer formed of a polyolefin. The layer formed of a polyolefin may be either a stretched or unstretched polyolefin film, preferably an unstretched polyolefin film. Specific examples of polyolefins include polyethylenes, such as low-density polyethylene, medium-density polyethylene, high-density polyethylene, and linear low-density polyethylene; crystalline or amorphous polypropylenes, such as homopolypropylene, block copolymers of polypropylene (for example, block copolymers of propylene and ethylene), and random copolymers of polypropylene (for example, random copolymers of propylene and ethylene); and terpolymers of ethylene-butene-propylene. Preferred among these polyolefins are a polyethylene and a polypropylene, and more preferred is a polypropylene, for example. The polypropylene may be either a homopolymer (homopolypropylene) or a copolymer. When the polypropylene is a copolymer, it may be either random polypropylene or block polypropylene, or may be a terpolymer. In view of heat shrinkage and excellent electrolytic solution resistance, the intermediate layer 13 preferably contains homopolypropylene, more preferably is formed of homopolypropylene, and still more preferably is an unstretched homopolypropylene film.

Specific examples of polyamides include aliphatic polyamides, such as nylon 6, nylon 66, nylon 610, nylon 12, nylon 46, and copolymers of nylon 6 and nylon 66; hexamethylenediamine-isophthalic acid-terephthalic acid copolyamides containing structural units derived from terephthalic acid and/or isophthalic acid, for example, nylon 6I, nylon 6T, nylon 6IT, and nylon 6I6T (I denotes isophthalic acid, and T denotes terephthalic acid), and polyamides containing aromatics, such as polymethaxylylene adipamide (MXD6); cycloaliphatic polyamides, such as polyaminomethyl cyclohexyl adipamide (PACM6); polyamides copolymerized with a lactam component or an isocyanate component such as 4,4'-diphenylmethane-diisocyanate, and polyester amide copolymers or polyether ester amide copolymers that are copolymers of copolyamides with polyesters or polyalkylene ether glycols; and copolymers thereof. These polyamides may be used alone or in combination.

Specific examples of polyesters include polyethylene terephthalate, polybutylene terephthalate, polyethylene naphthalate, polybutylene naphthalate, polyethylene isophthalate, copolyesters containing ethylene terephthalate as a main repeating unit, and copolyesters containing butylene terephthalate as a main repeating unit. Specific examples of copolyesters containing ethylene terephthalate as a main repeating unit include copolyesters obtained by polymerizing ethylene terephthalate as a main repeating unit with ethylene isophthalate (abbreviated as polyethylene (terephthalate/isophthalate); hereinafter similarly abbreviated), polyethylene (terephthalate/isophthalate), polyethylene (terephthalate/adipate), polyethylene (terephthalate/sodium sulfoisophthalate), polyethylene (terephthalate/sodium isophthalate), polyethylene (terephthalate/phenyl-dicarboxylate), and polyethylene (terephthalate/decane dicarboxylate). Specific examples of copolyesters containing butylene terephthalate as a main repeating unit include copolyesters obtained by polymerizing butylene terephthalate as a main repeating unit with butylene isophthalate (abbreviated as polybutylene (terephthalate/isophthalate); hereinafter similarly abbreviated), polybutylene (terephthalate/adipate), polybutylene (terephthalate/sebacate), polybutylene (terephthalate/decane dicarboxylate), and polybutylene naphthalate. These polyesters may be used alone or in combination.

Alternatively, the intermediate layer 13 may be formed of a nonwoven fabric formed of the above-described resin. When the intermediate layer 13 is a nonwoven fabric, the intermediate layer 13 is preferably formed of a polyolefin-based resin, a polyamide resin, or the like as described above.

The intermediate layer 13 may be formed of a single layer, or may be formed of multiple layers. Specific examples of the multiple layers include a three-layer structure in which block polypropylene/homopolypropylene/block polypropylene are laminated in this order.

The intermediate layer 13 may be blended with a colorant to form a layer containing the colorant. Examples of the colorant include the same colorants as those mentioned for the acid-modified polyolefin layer 11 and the polyolefin layer 12. Alternatively, a resin with low transparency may be selected to adjust the light transmittance. When the intermediate layer 13 is a film, the film may be a colored film or a film with low transparency. When the intermediate layer 13 is a nonwoven fabric, the nonwoven fabric may be a nonwoven fabric formed using a binder or fibers containing a colorant, or may be a nonwoven fabric with low transparency. When the intermediate layer 13 contains a pigment, the pigment content is, for example, about 0.05 to 5.00% by mass.

When the intermediate layer 13 is formed of a resin film, the surface of the intermediate layer 13 may be optionally subjected to a known easy-adhesion means, such as corona discharge treatment, ozone treatment, or plasma treatment.

In view of more satisfactorily achieving the effects of the present disclosure, the intermediate layer 13 preferably has a thickness of 120 µm or less, more preferably 110 µm or less, still more preferably about 100 µm or less, even more preferably about 90 µm or less. On the other hand, the thickness of the intermediate layer 13 is preferably about 20 µm or more, more preferably about 30 µm or more, and still more preferably about 40 µm or more. Preferred ranges of the thickness of the intermediate layer 13 include from about 20 to 120 µm, from about 20 to 110 µm, from about 20 to 100 µm, from about 20 to 90 µm, from about 30 to 120 µm, from about 30 to 110 µm, from about 30 to 100 µm, from about 30 to 90 µm, from about 40 to 120 µm, from about 40 to 110 µm, from about 40 to 100 µm, and from about 40 to 90 µm.

In view of improving the hermeticity of the power storage device of the present disclosure, when the adhesive film 1 for metal terminal has the intermediate layer 13, the adhesive film 1 for metal terminal preferably satisfies the relationship: the thickness of the intermediate layer 13 > the thickness of the acid-modified polyolefin layer 11 > the thickness of the polyolefin layer 12.

In view of improving the hermeticity of the power storage device of the present disclosure, when the adhesive film 1 for metal terminal has the intermediate layer 13, a ratio of the thickness of the intermediate layer 13 to a total thickness of the acid-modified polyolefin layer 11 and the polyolefin layer 12 is preferably about 0.2 or more, and more preferably about 0.3 or more, while it is preferably about 2.0 or less, and more preferably about 0.8 or less. Preferred ranges include from about 0.2 to 2.0, from about 0.2 to 0.8, from about 0.3 to 2.0, and from about 0.3 to 0.8.

In view of improving the hermeticity of the power storage device of the present disclosure, when the adhesive film 1 for metal terminal has the intermediate layer, a percentage of the total thickness of the acid-modified polyolefin layer 11 and the polyolefin layer 12, based on the entire thickness of the adhesive film 1 for metal terminal taken as 100%, is preferably about 30 to 90%, and more preferably about 50 to 80%.

The adhesive film 1 for metal terminal of the present disclosure can be produced, for example, by laminating the acid-modified polyolefin layer 11 and the polyolefin layer 12 on both surfaces of the intermediate layer 13. The acid-modified polyolefin layer 11 and the polyolefin layer 12 can be laminated to the intermediate layer 13, using a known method such as an extrusion lamination method, a T-die method, an inflation method, or a thermal lamination method.

The method of interposing the adhesive film 1 for metal terminal between the metal terminal 2 and the power storage device packaging material 3 is not specifically limited; for example, as shown in FIGS. 1 to 3, the adhesive film 1 for metal terminal may be wound around the metal terminal 2 in the region where the metal terminal 2 is sandwiched between the power storage device packaging materials 3. Alternatively, although this is not illustrated, the adhesive film 1 for metal terminal may be disposed on both surfaces of each of the metal terminals 2 as to as cross the two metal terminals 2, in the region where each metal terminal 2 is sandwiched between the power storage device packaging materials 3.

### [Metal Terminal 2]

The adhesive film 1 for metal terminal of the present disclosure is used by being interposed between the metal terminal 2 and the power storage device packaging material 3. The metal terminal 2 (tab) is a conductive member electrically connected to an electrode (the positive electrode or the negative electrode) of the power storage device element 4, and is formed of a metal material. Examples of the metal material forming the metal terminal 2 include, but are not limited to, aluminum, nickel, and copper. For example, the metal terminal 2 connected to the positive electrode of a lithium ion power storage device is typically formed of aluminum or the like. The metal terminal 2 connected to the negative electrode of a lithium ion power storage device is typically formed of copper, nickel, or the like.

Preferably, the surface of the metal terminal 2 is subjected to a chemical conversion treatment, in view of improving the electrolytic solution resistance. For example, when the metal terminal 2 is formed of aluminum, specific examples of the chemical conversion treatment include a known method in which a corrosion-resistant film composed of a phosphate, a chromate, a fluoride, a triazine-thiol compound, or the like is formed. Preferred among methods of forming a corrosion-resistant film is a phosphoric acid chromate treatment that uses a material composed of three components, i.e., a phenol resin, a chromium(III) fluoride compound, and phosphoric acid.

The dimensions of the metal terminal 2 may be appropriately adjusted depending on the dimensions of the power storage device to be used, for example. The thickness of the metal terminal 2 is preferably about 50 to 1000 µm, and more preferably about 70 to 800 µm. The length of the metal terminal 2 is preferably about 1 to 200 mm, and more preferably about 3 to 150 mm. The width of the metal terminal 2 is preferably about 1 to 200 mm, and more preferably about 3 to 150 mm.

### [Power Storage Device Packaging Material 3]

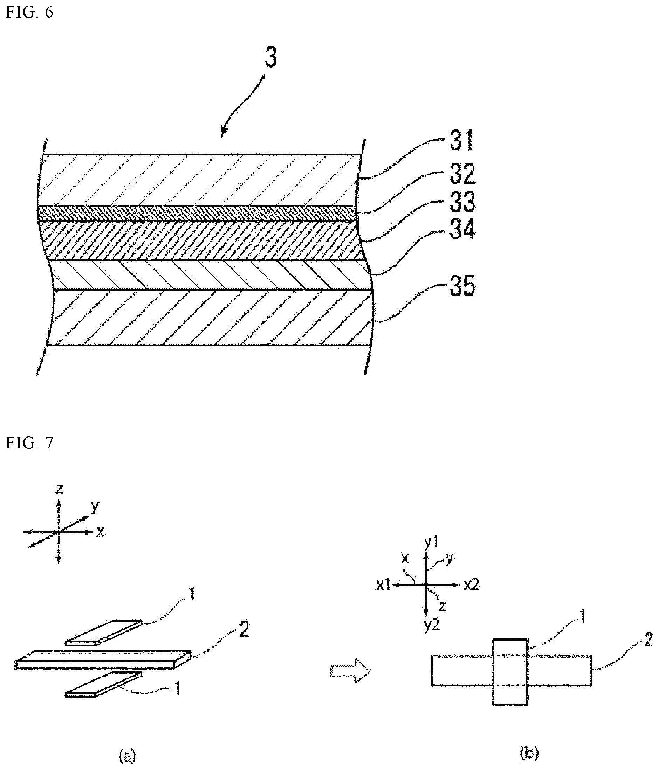

The power storage device packaging material 3 is, for example, a power storage device packaging material having a laminated structure formed of a laminate having at least a base material layer 31, the barrier layer 33, and the heat-sealable resin layer 35 in this order. FIG. 6 shows one example of the cross-sectional structure of the power storage device packaging material 3, in which the base material layer 31, an optional adhesive agent layer 32, the barrier layer 33, an optional adhesive layer 34, and the heat-sealable resin layer 35 are laminated in this order. In the power storage device packaging material 3, the base material layer 31 is the outermost layer, and the heat-sealable resin layer 35 is the innermost layer. During the assembly of a power storage device, surfaces of the heat-sealable resin layers 35 positioned on the periphery of the power storage device element 4 are contacted and heat-sealed with each other to hermetically seal the power storage device element 4, such that the power storage device element 4 is sealed. While FIGS. 1 to 3 illustrate a power storage device 10 that uses the embossed-type power storage device packaging material 3 molded by embossing, for example, the power storage device packaging material 3 may also be of a pouched type that is not molded. The pouched type includes a three-side seal type, a four-side seal type, and a pillow type, and any of these types may be used.

While the thickness of the laminate forming the power storage device packaging material 3 is not specifically limited, the upper limit is, for example, about 190 µm or less, and preferably about 180 µm or less, about 160 µm or less, about 155 µm or less, about 140 µm or less, about 130µm or less, or about 120 µm or less, in view of reducing costs, improving the energy density, and the like. On the other hand, the lower limit is preferably about 35 µm or more, about 45 µm or more, about 60 µm or more, or about 80 µm or more, in view of maintaining the function of the power storage device packaging material 3 to protect the power storage device element 4. Preferred ranges include from about 35 to 190 µm, from about 35 to 180 µm, from about 35 to 160 µm, from about 35 to 155 µm, from about 35 to 140 µm, from about 35 to 130 µm, from about 35 to 120 µm, from about 45 to 190 µm, from about 45 to 180 µm, from about 45 to 160 µm, from about 45 to 155 µm, from about 45 to 140 µm, from about 45 to 130 µm, from about 45 to 120 µm, from about 60 to 190 µm, from about 60 to 180 µm, from about 60 to 160 µm, from about 60 to 155 µm, from about 60 to 140 µm, from about 60 to 130 µm, from about 60 to 120 µm, from about 80 to 190 µm, from about 80 to 180 µm, from about 80 to 160 µm, from about 80 to 155 µm, from about 80 to 140 µm, from about 80 to 130 µm, and from about 80 to 120 µm.

### (Base Material Layer 31)

In the power storage device packaging material 3, the base material layer 31 is a layer that functions as the base material of the power storage device packaging material, and forms the outermost layer side.

The material forming the base material layer 31 is not specifically limited as long as it has insulation properties. Examples of the material forming the base material layer 31 include polyesters, polyamides, epoxy, acrylic resins, fluororesins, polyurethanes, silicone resins, phenol, polyetherimides, polyimides, and mixtures or copolymers thereof. A polyester, such as polyethylene terephthalate or polybutylene terephthalate, which has the advantage of having excellent electrolytic solution resistance and being unlikely to cause whitening or the like due to attachment of the electrolytic solution, is suitable for use as the material forming the base material layer 31. A polyamide film, which has excellent stretchability and can prevent whitening due to a resin fracture in the base material layer 31 during molding, is also suitable for use as the material forming the base material layer 31.

The base material layer 31 may be formed of a uniaxially or biaxially stretched resin film, or may be formed of an unstretched resin film. Among the above, a uniaxially or biaxially stretched resin film, particularly a biaxially stretched resin film, which has improved heat resistance through oriented crystallization, is suitable for use as the base material layer 31.

Preferred among the above as the resin film forming the base material layer 31 are nylons and polyesters, and more preferred are biaxially stretched nylons and biaxially stretched polyesters.

The base material layer 31 can also be laminated with a resin film made of a different material, in order to improve the pinhole resistance and the insulation properties when used as a packaging material for power storage devices. Specific examples include a multilayer structure in which a polyester film and a nylon film are laminated, and a multilayer structure in which a biaxially stretched polyester and a biaxially stretched nylon are laminated. When the base material layer 31 has a multilayer structure, the resin films may be bonded with an adhesive, or may be directly laminated without an adhesive. Examples of methods of bonding the resin films without an adhesive include methods in which the resin films are bonded in a heat-melted state, such as a co-extrusion method, a sandwich lamination method, and a thermal lamination method.

The base material layer 31 may be subjected to a friction-reducing treatment beforehand to improve moldability. When the base material layer 31 is subjected to a friction-reducing treatment, the coefficient of friction of the surface of the base material layer 31 is 1.0 or less, for example, although not specifically limited thereto. Examples of the friction-reducing treatment of the base material layer 31 include matting treatment, formation of a thin film layer of a slipping agent, and a combination thereof.

The base material layer 31 has a thickness of, for example, about 10 to 50 µm, preferably about 15 to 30 µm.

### (Adhesive Agent Layer 32)

In the power storage device packaging material 3, the adhesive agent layer 32 is a layer that is optionally disposed on the base material layer 31 to impart adhesion to the base material layer 31. That is, the adhesive agent layer 32 is provided between the base material layer 31 and the barrier layer 33.

The adhesive agent layer 32 is formed of an adhesive capable of bonding the base material layer 31 and the barrier layer 33. The adhesive to be used for forming the adhesive agent layer 32 may be a two-liquid curable adhesive or a one-liquid curable adhesive. The adhesion mechanism of the adhesive used for forming the adhesive agent layer 32 is not specifically limited, and may be any of a chemical reaction type, a solvent volatilization type, a heat melting type, a heat pressing type, and the like.

Preferred examples of the resin component of the adhesive that can be used to form the adhesive agent layer 32 include a polyurethane-based two-liquid curable adhesive; and a polyamide, a polyester, or a blend resin of any of these resins and a modified polyolefin, in view of having excellent extensibility, excellent durability and yellowing-preventing action under high-humidity conditions, excellent thermal degradation-preventing action during heat-sealing, and the like, and effectively preventing delamination by preventing a decrease in the lamination strength between the base material layer 31 and the barrier layer 33.

The adhesive agent layer 32 may be multilayered with different adhesive components. When the adhesive agent layer 32 is to be multilayered with different adhesive components, it is preferred to select a resin having excellent adhesion to the base material layer 31 as the adhesive component to be disposed on the base material layer 31 side, and select an adhesive component having excellent adhesion to the barrier layer 33 as the adhesive component to be disposed on the barrier layer 33 side, in view of improving the lamination strength between the base material layer 31 and the barrier layer 33. When the adhesive agent layer 32 is to be multilayered with different adhesive components, specific examples of preferred adhesive components to be disposed on the barrier layer 33 side include acid-modified polyolefins, metal-modified polyolefins, mixed resins of polyesters and acid-modified polyolefins, and resins containing copolyesters.

The adhesive agent layer 32 has a thickness of, for example, about 2 to 50 µm, preferably about 3 to 25 µm.

### (Barrier Layer 33)

In the power storage device packaging material 3, the barrier layer 33 is a layer that functions to improve the strength of the power storage device packaging material, and prevent the ingress of water vapor, oxygen, light, and the like into the power storage device. The barrier layer 33 is preferably a metal layer, that is, a layer formed of a metal. Specific examples of the metal forming the barrier layer 33 include aluminum, stainless steel, and titanium, with aluminum being preferred. The barrier layer 33 may be formed of, for example, a metal foil or a vapor-deposited metal film, a vapor-deposited inorganic oxide film, a vapor-deposited carbon-containing inorganic oxide film, or a film provided with any of these vapor-deposited films. The barrier layer 33 is preferably formed of a metal foil, and more preferably formed of an aluminum foil. In view of preventing the formation of creases and pinholes in the barrier layer 33 during the production of the power storage device packaging material, the barrier layer is still more preferably formed of a soft aluminum foil, for example, annealed aluminum (JIS H4160: 1994 A8021 H-O, JIS H4160: 1994 A8079 H-O, JIS H4000: 2014 A8021 P-O, and JIS H4000: 2014 A8079 P-O).

The barrier layer 33 preferably has a thickness of about 10 to 200 µm, more preferably about 20 to 100 mm, about 20 to 45 µm, about 45 to 65 µm, or about 65 to 85 µm, in view of making the formation of pinholes less likely during molding, while reducing the thickness of the power storage device packaging material.

Preferably, at least one surface, preferably both surfaces, of the barrier layer 33 is/are subjected to a chemical conversion treatment, in order to stabilize the adhesiveness and prevent dissolution or corrosion, for example. As used herein, the chemical conversion treatment refers to a treatment for forming a corrosion-resistant film on a surface of the barrier layer.

### (Adhesive Layer 34)

In the power storage device packaging material 3, the adhesive layer 34 is a layer that is optionally provided between the barrier layer 33 and the heat-sealable resin layer 35, in order to strongly bond the heat-sealable resin layer 35.

The adhesive layer 34 is formed of an adhesive capable of bonding the barrier layer 33 and the heat-sealable resin layer 35. While the composition of the adhesive used for forming the adhesive layer is not specifically limited, it is, for example, a resin composition containing an acid-modified polyolefin. Examples of the acid-modified polyolefin include the same acid-modified polyolefins as those mentioned for the acid-modified polyolefin layer 11 and the polyolefin layer 12.

The adhesive layer 34 has a thickness of, for example, about 1 to 40 µm, preferably about 2 to 30 µm.

### (Heat-Sealable Resin Layer 35)

In the power storage device packaging material 3, the heat-sealable resin layer 35 is a layer that corresponds to the innermost layer and is heat-sealed with another heat-sealable resin layer during the assembly of a power storage device to hermetically seal the power storage device element.

While the resin component to be used as the heat-sealable resin layer 35 is not specifically limited as long as it can be heat-sealed, examples include a polyolefin and a cyclic polyolefin.

Specific examples of polyolefins include polyethylenes, such as low-density polyethylene, medium-density polyethylene, high-density polyethylene, and linear low-density polyethylene; crystalline or amorphous polypropylenes, such as homopolypropylene, block copolymers of polypropylene (for example, block copolymers of propylene and ethylene), and random copolymers of polypropylene (for example, random copolymers of propylene and ethylene); and terpolymers of ethylene-butene-propylene. Preferred among these polyolefins are a polyethylene and a polypropylene, for example.

The cyclic polyolefin is a copolymer of an olefin and a cyclic monomer. Examples of the olefin as a constituent monomer of the cyclic polyolefin include ethylene, propylene, 4-methyl-1-pentene, butadiene, and isoprene. Examples of the cyclic monomer as a constituent monomer of the cyclic polyolefin include cyclic alkenes, such as norbornene; specifically, cyclic dienes, such as cyclopentadiene, dicyclopentadiene, cyclohexadiene, and norbornadiene. Preferred among these polyolefins are cyclic alkenes, and more preferred is norbornene. Examples of constituent monomers also include styrene.

Preferred among these resin components are a crystalline or amorphous polyolefin, a cyclic polyolefin, and a blend polymer thereof; and more preferred are polyethylene, polypropylene, a copolymer of ethylene and norbornene, and a blend polymer of two or more of the above.

The heat-sealable resin layer 35 may be formed with one resin component alone, or may be formed with a blend polymer obtained by combining two or more resin components. Furthermore, the heat-sealable resin layer 35 may be formed of only one layer, or may be formed of two or more layers with the same resin component or different resin components. Particularly preferably, the resin of the heat-sealable resin layer 35 and the resin of the polyolefin layer 12 are the same, so as to improve the adhesion between these layers.

The heat-sealable resin layer 35 has a thickness of about 2 to 2000 µm, preferably about 5 to 1000 µm, more preferably about 10 to 500 µm, although not specifically limited thereto.

### 2. Power Storage Device

The power storage device 10 of the present disclosure comprises the power storage device element 4 comprising at least a positive electrode, a negative electrode, and an electrolyte; the power storage device packaging material 3 for sealing the power storage device element 4; and the metal terminal 2 electrically connected to each of the positive electrode and the negative electrode and protruding outside the power storage device packaging material 3. In the power storage device 10 of the present disclosure, the adhesive film 1 for metal terminal of the present disclosure is interposed between the metal terminal 2 and the power storage device packaging material 3. That is, the power storage device 10 of the present disclosure may be produced by a method comprising the step of interposing the adhesive film 1 for metal terminal of the present disclosure between the metal terminal 2 and the power storage device packaging material 3.

Specifically, the power storage device element 4 comprising at least a positive electrode, a negative electrode, and an electrolyte is covered with the power storage device packaging material 3 such that the adhesive film 1 for metal terminal of the present disclosure is interposed between the metal terminal 2 and the heat-sealable resin layer 35, with the metal terminal 2 connected to each of the positive electrode and the negative electrode protruding outside, and such that a flange of the power storage device packaging material 3 (region where the heat-sealable resin layer 35 is brought into contact with the other heat-sealable resin layer 35, i.e., the peripheral region 3a of the power storage device packaging material 3) can be formed on the periphery of the power storage device element 4, and then the heat-sealable resin layers 35 in the flange are heat-sealed to hermetically seal the power storage device element. As a result, the power storage device 10 that uses the power storage device packaging material 3 is provided. When the power storage device packaging material 3 is used to house the power storage device element 4, it is used such that the heat-sealable resin layer 35 of the power storage device packaging material 3 is positioned on the inner side (surface in contact with the power storage device element 4) thereof.

The power storage device of the present disclosure is suitable for use as power storage devices such as batteries (including condensers and capacitors). The power storage device of the present disclosure may be either a primary battery or a secondary battery, preferably a secondary battery. While the type of secondary battery is not specifically limited, examples include lithium ion batteries, lithium ion polymer batteries, all-solid-state batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers, and capacitors. Among these secondary batteries, preferred secondary batteries include lithium ion batteries and lithium ion polymer batteries.

### Examples

The present disclosure will be hereinafter described in detail with reference to examples and comparative examples; however, the present disclosure is not limited to the examples.

### <Production of Adhesive Films for Metal Terminal>

### Example 1

An extruder and a T-die casting device were used to extrude, at a temperature of 260°C, maleic anhydride-modified polypropylene (random polypropylene (a random copolymer of ethylene and propylene) modified with maleic anhydride) for forming an acid-modified polyolefin layer onto one surface of an unstretched polypropylene film (homopolypropylene with a thickness of 60 µm) as an intermediate layer and extrude random polypropylene for forming a polyolefin layer on the other surface of the intermediate layer, thus giving an adhesive film for metal terminal having a laminate of the acid-modified polyolefin layer (PPa layer with a thickness of 50 µm)/the intermediate layer (CPP layer with a thickness of 60 µm)/the polyolefin layer (PP layer with a thickness of 40 µm) in this order and having arithmetic surface roughnesses, glosses (GU values), and dynamic friction coefficients as shown in Table 1. The arithmetic surface roughnesses and the like of the acid-modified polyolefin layer and the polyolefin layer were adjusted using the surface shape of the cooling roll used to form each layer. As shown in Table 1, the adhesive film for metal terminal of Example 1 was not blended with a colorant. The random polypropylene for forming the polyolefin layer was blended with erucamide as a lubricant at a concentration of 700 ppm.

### Examples 2-9 and Comparative Examples 1-2

The procedure of Example 1 was repeated except that the acid-modified polyolefin layer was blended with carbon black as a colorant at a concentration of 0.15% by mass, and the random polypropylene for forming the polyolefin layer was blended with erucamide as a lubricant at concentrations as shown in Table 1, thus giving adhesive films for metal terminal of Examples 2-9 and Comparative Examples 1-2 each having a laminate of the acid-modified polyolefin layer (PPa layer with a thickness of 50 µm)/the intermediate layer (CPP layer with a thickness of 60 µm)/the polyolefin layer (PP layer with a thickness of 40 µm) in this order and having arithmetic surface roughnesses, glosses (GU values), and dynamic friction coefficients as shown in Table 1. The arithmetic surface roughnesses and the like of the acid-modified polyolefin layer and the polyolefin layer were adjusted using the surface shape of the cooling roll used to form each layer.

### Example 10

An extruder and a T-die casting device were used to extrude, at a temperature of 260°C, maleic anhydride-modified polypropylene (random polypropylene modified with maleic anhydride) for forming an acid-modified polyolefin layer onto one surface of an unstretched polypropylene film (homopolypropylene with a thickness of 50 µm) as an intermediate layer and extrude random polypropylene for forming a polyolefin layer on the other surface of the intermediate layer, thus giving an adhesive film for metal terminal having a laminate of the acid-modified polyolefin layer (PPa layer with a thickness of 50 µm)/the intermediate layer (CPP layer with a thickness of 50 µm)/the polyolefin layer (PP layer with a thickness of 50 µm) in this order and having arithmetic surface roughnesses, glosses (GU values), and dynamic friction coefficients as shown in Table 1. The arithmetic surface roughnesses and the like of the acid-modified polyolefin layer and the polyolefin layer were adjusted using the surface shape of the cooling roll used to form each layer. In the adhesive film for metal terminal of Example 10, the acid-modified polyolefin layer was blended with carbon black as a colorant at a concentration of 0.15% by mass, and the random polypropylene for forming the polyolefin layer was blended with erucamide as a lubricant at a concentration of 700 ppm, as shown in Table 1.

### Example 11

An extruder and a T-die casting device were used to extrude, at a temperature of 260°C, maleic anhydride-modified polypropylene (random polypropylene modified with maleic anhydride) for forming an acid-modified polyolefin layer onto one surface of an unstretched polypropylene film (random polypropylene with a thickness of 50 µm) as an intermediate layer and extrude random polypropylene for forming a polyolefin layer on the other surface of the intermediate layer, thus giving an adhesive film for metal terminal having a laminate of the acid-modified polyolefin layer (PPa layer with a thickness of 50 µm)/the intermediate layer (CPP layer with a thickness of 50 µm)/the polyolefin layer (PP layer with a thickness of 50 µm) and having arithmetic surface roughnesses, glosses (GU values), and dynamic friction coefficients as shown in Table 1. The arithmetic surface roughnesses and the like of the acid-modified polyolefin layer and the polyolefin layer were adjusted using the surface shape of the cooling roll used to form each layer. In the adhesive film for metal terminal of Example 11, the acid-modified polyolefin layer was blended with carbon black as a colorant at a concentration of 0.15% by mass, and the random polypropylene for forming the polyolefin layer was blended with erucamide as a lubricant at a concentration of 700 ppm, as shown in Table 1.

### Example 12

An extruder and a T-die casting device were used to extrude, at a temperature of 260°C, maleic anhydride-modified polypropylene (random polypropylene modified with maleic anhydride) for forming an acid-modified polyolefin layer onto one surface of an unstretched polypropylene film (homopolypropylene with a thickness of 40 µm) as an intermediate layer and extrude random polypropylene for forming a polyolefin layer on the other surface of the intermediate layer, thus giving an adhesive film for metal terminal having a laminate of the acid-modified polyolefin layer (PPa layer with a thickness of 30 µm)/the intermediate layer (CPP layer with a thickness of 40 µm)/the polyolefin layer (PP layer with a thickness of 30 µm) in this order and having arithmetic surface roughnesses, glosses (GU values), and dynamic friction coefficients as shown in Table 1. The arithmetic surface roughnesses and the like of the acid-modified polyolefin layer and the polyolefin layer were adjusted using the surface shape of the cooling roll used to form each layer. In the adhesive film for metal terminal of Example 12, the acid-modified polyolefin layer was blended with carbon black as a colorant at a concentration of 0.15% by mass, and the random polypropylene for forming the polyolefin layer was blended with erucamide as a lubricant at a concentration of 700 ppm, as shown in Table 1.

### Example 13

An extruder and a T-die casting device were used to extrude, at a temperature of 260°C, maleic anhydride-modified polypropylene (random polypropylene modified with maleic anhydride) for forming an acid-modified polyolefin layer onto one surface of an unstretched polypropylene film (homopolypropylene with a thickness of 80 µm) as an intermediate layer and extrude random polypropylene for forming a polyolefin layer on the other surface of the intermediate layer, thus giving an adhesive film for metal terminal having a laminate of the acid-modified polyolefin layer (PPa layer with a thickness of 60 µm)/the intermediate layer (CPP layer with a thickness of 80 µm)/the polyolefin layer (PP layer with a thickness of 60 µm) in this order and having arithmetic surface roughnesses, glosses (GU values), and dynamic friction coefficients as shown in Table 1. The arithmetic surface roughnesses and the like of the acid-modified polyolefin layer and the polyolefin layer were adjusted using the surface shape of the cooling roll used to form each layer. In the adhesive film for metal terminal of Example 13, the acid-modified polyolefin layer was blended with carbon black as a colorant at a concentration of 0.15% by mass, and the random polypropylene for forming the polyolefin layer was blended with erucamide as a lubricant at a concentration of 700 ppm, as shown in Table 1.

### Example 14

An extruder and a T-die casting device were used to extrude, at a temperature of 260°C, maleic anhydride-modified polypropylene (random polypropylene modified with maleic anhydride) for forming an acid-modified polyolefin layer onto one surface of an unstretched polypropylene film (homopolypropylene with a thickness of 80 µm) as an intermediate layer and extrude random polypropylene for forming a polyolefin layer on the other surface of the intermediate layer, thus giving an adhesive film for metal terminal having a laminate of the acid-modified polyolefin layer (PPa layer with a thickness of 60 µm)/the intermediate layer (CPP layer with a thickness of 80 µm)/the polyolefin layer (PP layer with a thickness of 60 µm) in this order and having arithmetic surface roughnesses, glosses (GU values), and dynamic friction coefficients as shown in Table 1. The arithmetic surface roughnesses and the like of the acid-modified polyolefin layer and the polyolefin layer were adjusted using the surface shape of the cooling roll used to form each layer. In the adhesive film for metal terminal of Example 14, the intermediate layer was blended with carbon black as a colorant at a concentration of 0.15% by mass, and the random polypropylene for forming the polyolefin layer was blended with erucamide as a lubricant at a concentration of 700 ppm, as shown in Table 1.

### Example 15

An extruder and a T-die casting device were used to extrude, at a temperature of 260°C, two layers of maleic anhydride-modified polypropylene (random polypropylene modified with maleic anhydride) 6 for forming acid-modified polyolefin layers onto one surface of an unstretched polypropylene film (homopolypropylene with a thickness of 60 µm) as an intermediate layer and extrude random polypropylene for forming a polyolefin layer on the other surface of the intermediate layer, thus giving an adhesive film for metal terminal having a laminate of the acid-modified polyolefin layer (PPa layer with a thickness of 40 µm)/the acid-modified polyolefin layer (PPa layer with a thickness of 40 µm)/the intermediate layer (CPP layer with a thickness of 60 µm)/the polyolefin layer (PP layer with a thickness of 60 µm) in this order and having arithmetic surface roughnesses, glosses (GU values), and dynamic friction coefficients as shown in Table 1. The arithmetic surface roughnesses and the like of the acid-modified polyolefin layers and the polyolefin layer were adjusted using the surface shape of the cooling roll used to form each layer. In the adhesive film for metal terminal of Example 15, the acid-modified polyolefin layer adjacent to the intermediate layer was blended with carbon black as a colorant at a concentration of 0.15% by mass, and the random polypropylene for forming the polyolefin layer was blended with erucamide as a lubricant at a concentration of 700 ppm, as shown in Table 1.

### <Arithmetic Surface Roughness Ra>

For each adhesive film for metal terminal, the arithmetic surface roughness RaA (µm) of the metal terminal-facing surface of the acid-modified polyolefin layer and the arithmetic surface roughness RaB (µm) of the power storage device packaging material-facing surface of the polyolefin layer were each measured using a commercial optical surface profiler (New View 7300 manufactured by Zygo Corporation). The average value of the measurements, n = 3, was adopted. The measured results are shown in Table 1.

### <Gloss (GU Value)>

For each adhesive film for metal terminal, the gloss GuA (GU) of the metal terminal-facing surface of the acid-modified polyolefin layer and the gloss GuB (GU) of the power storage device packaging material-facing surface of the polyolefin layer were each measured as follows: A Gu value was measured according to JIS Z 8741: 1997, using the micro-tri-gloss AG-4430 manufactured by BYK-Gardner, at an incidence angle of 60° of light with respect to the metal terminal-facing surface or the power storage device packaging material-facing surface of the adhesive film for metal terminal, and the observed Gu value was determined as the gloss. The average value of the measurements, n = 5, was adopted. The measured results are shown in Table 1.

### <Dynamic Friction Coefficient>

For each adhesive film for metal terminal, the dynamic friction coefficient µA of the metal terminal-facing surface of the acid-modified polyolefin layer and the dynamic friction coefficient µB of the power storage device packaging material-facing surface of the polyolefin layer were each measured as follows: A friction test was performed using the method according to 8.1 Film to Film Measurement of JIS K 7125: 1999. First, the power storage device packaging material was cut into two sheets of samples with a size of 80 mm in the TD direction × 200 mm in the MD direction. Next, for measurement of the dynamic friction coefficient µA of the metal terminal-facing surface of the acid-modified polyolefin layer, the samples were placed on each other with the metal terminal-facing surfaces of the acid-modified polyolefin layers facing each other, and a sliding piece was placed on the samples. The bottom of the sliding piece was covered with rubber. The sliding piece had a total mass of 200 g. The samples and the sliding piece were brought in close contact to avoid slippage. Next, the sliding piece was pulled at a speed of 100 mm/min, the dynamic friction force (N) between the two samples was measured, and the dynamic friction force was divided by the normal force (1.96 N) of the sliding piece to calculate the dynamic friction coefficient. To calculate the dynamic friction coefficient µB of the power storage device packaging material-facing surface of the polyolefin layer, the samples were placed on each other with the power storage device packaging material-facing surfaces of the polyolefin layers facing each other, and then the test was performed. The dynamic friction coefficient was determined from the average value of measurements up to the initial 30 mm after the beginning of relative shear motion between the contacting surfaces, ignoring the peak of static friction force. The load cell was directly connected to the sliding piece. The measured results are shown in Table 1.

### <Evaluation>

Each of the adhesive films for metal terminal was evaluated in terms of distinguishability between the surfaces, formation of air bubbles, and heat shrinkage, as shown below. The evaluation results are shown in Table 1.

### [Distinguishability between the Surfaces]

The adhesive film for metal terminal was cut into 10 cm squares, and each sample was aligned with the metal terminal-facing surface or the power storage device packaging material-facing surface face-up. Next, the adhesive film for metal terminal was observed from a distance of 1.0 m to evaluate the ease of distinguishing between the metal terminal-facing surface and the power storage device packaging material-facing surface, based on the following criteria:
A: easily distinguishable
B: distinguishable
C: distinguishable but with a slight difficulty
D: indistinguishable

### [Formation of Air Bubbles]

The adhesive film for metal terminal was cut to a size of 10 mm (TD) × 55 mm (MD) to prepare two sheets of the adhesive film for metal terminal. A metal terminal (with a width of 45 mm, a length of 60 mm, and a thickness of 400 µm) made of an aluminum alloy was also prepared. As shown in the schematic diagram of FIG. 7, with the MD of the adhesive films being aligned along the width direction of the metal terminal, the adhesive films for metal terminal were disposed on both surfaces of a central position of the metal terminal with their acid-modified polyolefin layers facing the metal terminal. A flat-plate press having upper and lower metal heads covered with silicone rubber with a thickness of 3.0 mm and a hardness of 40 hardness was used to heat-seal the metal terminal with the adhesive films for metal terminal at 190°C and 0.25 MPa (surface pressure applied to the silicone rubber) for 10 seconds to prepare the metal terminal with the adhesive film for metal terminal. The metal terminal with the adhesive film for metal terminal was observed with a loupe (at 20x magnification) to check whether air bubbles formed at the interface between the adhesive films for metal terminal and the metal terminal. The evaluation criteria were as shown below. The sealing time was set to 10 seconds, which is two-thirds of the usual time, in order to create harsh conditions where air bubbles easily form.
A: No air bubbles were observed.
B: Small air bubbles formed on the side surface (surface in the thickness direction) of the metal terminal.
C: Air bubbles formed on the side surface (surface in the thickness direction) and the surface (surface perpendicular to the side surface) of the metal terminal.

### [Heat Shrinkage]

The adhesive film for metal terminal was cut to a size of 10 mm (TD) × 120 mm (MD) and marked with gauges with a length of 100 mm therebetween. Next, the adhesive film for metal terminal was heated in an oven at 180°C for 2 minutes while being suspended by holding one gauge, and then the gauge length was measured. A gauge length retention ratio (length after heating/length before heating) was calculated to evaluate prevention of heat shrinkage, based on the following criteria:
A: A gauge length retention ratio of 0.7 or more, i.e., heat shrinkage was sufficiently prevented.
C: A gauge length retention ratio of less than 0.7, i.e., heat shrinkage was not sufficiently prevented.

**[Table 1]**

| | Laminated Structure of Adhesive Film For Metal Terminal | Acid-Modified Polyolefin Layer | | | | Polyolefin Layer | | | | Arithmetic Surface Roughness RaA/RaB | Evaluation | | |
|---|---|---|---|---|---|---|---|---|---|---|---|---|---|
| | | Colorant | Arithmetic Surface Roughness RaA (µm) | Gloss GuA (GU) | Dynamic Friction Coefficient µA | **Lubricant** Concentration (ppm) | Arithmetic Surface Roughness RaB (µm) | Gloss GuB (GU) | Dynamic Friction Coefficient µB | | Distinguishability between the Surfaces | **Formation** of Air Bubbles | Heat Shrinkage |
| Ex. 1 | rPP(40)/hPP(60)/rPPa(50) | None | 0.74 | 4.9 | 0.34 | | 0.36 | 65.6 | 0.26 | 2.06 | C | A | A |
| Ex. 2 | | | 1.28 | 0.3 | 0.25 | | 0.34 | 71.0 | 0.27 | 3.76 | A | B | A |
| Comp. Ex. 1 | | | 0.71 | 7.1 | 0.31 | | 0.72 | 6.9 | 0.21 | 0.99 | D | A | A |
| Ex. 3 | rPP(40)/hPP(60)/rPPa(50)Black | | 0.74 | 5.6 | 0.29 | 700 | 0.51 | 25.0 | 0.23 | 1.45 | B | A | A |
| Ex. 4 | | | 0.78 | 7.0 | 0.31 | | 0.58 | 16.0 | 0.23 | 1.34 | B | A | A |
| Ex. 5 | | | 0.73 | 4.7 | 0.32 | | 0.35 | 67.0 | 0.28 | 2.09 | A | A | A |
| Comp. Ex. 2 | | | 0.23 | 79.0 | 0.93 | | 0.24 | 81.0 | 0.31 | 0.96 | D | B | A |
| Ex. 6 | | | 0.74 | - | 0.30 | - | 0.34 | - | 0.81 | 2.18 | A | A | A |
| Ex. 7 | rPP(40)/h PP (60)/rP Pa (50) Black | Carbon Black | 0.72 | - | 0.29 | 300 | 0.35 | - | 0.48 | 2.06 | A | A | A |
| Ex. 8 | | | 0.73 | - | 0.28 | 1000 | 0.35 | - | 0.18 | 2.09 | A | A | A |
| Ex. 9 | | | 0.73 | - | 0.31 | 1500 | 0.34 | - | 0.08 | 2.15 | A | A | A |
| Ex. 10 | rPP(50)/hPP(50)/rPPa(50)Black | | 0.76 | - | 0.29 | 700 | 0.35 | - | 0.29 | 2.11 | A | A | A |
| Ex. 11 | rPP(50)/rPP(50)/rPPa(50)Black | | 0.74 | - | 0.33 | | 0.35 | - | 0.29 | 2.11 | A | A | C |
| Ex. 12 | rPP(30)/hPP(40)/rPPa(30)Black | | 0.70 | 4.9 | 0.34 | | 0.33 | 69.0 | 0.25 | 2.12 | A | B | A |
| Ex. 13 | rPP(60)/hPP(80)/rPPa(60)Black | | 0.76 | 4.0 | 0.30 | | 0.37 | 62.0 | 0.26 | 2.05 | A | A | A |
| Ex. 14 | rPP(60)/hCPP(80)Black/rPPa(60) | | 0.72 | 5.3 | 0.31 | | 0.35 | 61.0 | 0.25 | 2.06 | A | A | A |
| Ex. 15 | rPP(60)/hCPP(60)/rPPa(40)Black/rPPa(40) | | 0.70 | 4.8 | 0.33 | | 0.36 | 63.0 | 0.25 | 1.94 | A | A | A |

In the laminated structure shown in Table 1, rPP designates random polypropylene, hPP designates homopolypropylene, rPPa designates random polypropylene modified with maleic anhydride, and the numbers in parentheses are the thicknesses (µm).

As described above, the present disclosure provides aspects of the invention as set forth below:
Item 1. An adhesive film for metal terminal, which is to be interposed between a metal terminal electrically connected to an electrode of a power storage device element and a power storage device packaging material for sealing the power storage device element,
   wherein the adhesive film for metal terminal comprises a laminate comprising at least an acid-modified polyolefin layer for forming a metal terminal-facing surface and a polyolefin layer for forming a power storage device packaging material-facing surface, and
   a ratio of arithmetic surface roughness RaA (µm) of the metal terminal-facing surface of the acid-modified polyolefin layer to arithmetic surface roughness RaB (µm) of the power storage device packaging material-facing surface of the polyolefin layer satisfies the relationship: RaA/RaB > 1.2.
Item 2. The adhesive film for metal terminal according to item 1, wherein the arithmetic surface roughness RaB (µm) is 0.6 µm or less.
Item 3. The adhesive film for metal terminal according to item 1 or 2, wherein the power storage device packaging material-facing surface of the polyolefin layer has a gloss GuB (GU) of 15 GU or more as measured at an incidence angle of 60°.
Item 4. The adhesive film for metal terminal according to any one of items 1 to 3, wherein a dynamic friction coefficient µB of the power storage device packaging material-facing surface of the polyolefin layer and a dynamic friction coefficient µA of the metal terminal-facing surface of the acid-modified polyolefin layer are both in a range of 0.1 to 0.5, as measured in accordance with the conditions in 8.1 Film to Film of JIS K 7125: 1999.
Item 5. The adhesive film for metal terminal according to any one of items 1 to 4, wherein at least one of the acid-modified polyolefin layer and the polyolefin layer contains 1500 ppm or less of a lubricant.
Item 6. The adhesive film for metal terminal according to any one of items 1 to 5, wherein the polyolefin layer contains at least one of random polypropylene and a terpolymer composed of ethylene-propylene-butene.
Item 7. The adhesive film for metal terminal according to any one of items 1 to 6, wherein the acid-modified polyolefin layer contains acid-modified random polypropylene.
Item 8. The adhesive film for metal terminal according to any one of items 1 to 7, further comprising an intermediate layer between the acid-modified polyolefin layer and the polyolefin layer,
   wherein the intermediate layer contains homopolypropylene.
Item 9. The adhesive film for metal terminal according to any one of items 1 to 8, further comprising an intermediate layer between the acid-modified polyolefin layer and the polyolefin layer,
   wherein the adhesive film for metal terminal satisfies the relationship: the thickness of the intermediate layer > the thickness of the acid-modified polyolefin layer > the thickness of the polyolefin layer.
Item 10. The adhesive film for metal terminal according to any one of items 1 to 9, wherein the adhesive film for metal terminal has a thickness of 50 µm or more and 250 µm or less.
Item 11. The adhesive film for metal terminal according to any one of items 1 to 10, wherein the power storage device packaging material comprises a laminate comprising at least a base material layer, a barrier layer, and a heat-sealable resin layer in this order from an outer side, and
   a resin forming the heat-sealable resin layer is identical to a resin forming the polyolefin layer.
Item 12. The adhesive film for metal terminal according to any one of items 1 to 11, wherein the adhesive film for metal terminal contains a pigment.
Item 13. The adhesive film for metal terminal according to item 12, wherein the pigment is at least one of a black pigment and a white pigment, and
   the pigment content in a layer containing the pigment is 0.05% by mass or more and 5.00% by mass or less.
Item 14. A method for producing an adhesive film for metal terminal, which is to be interposed between a metal terminal electrically connected to an electrode of a power storage device element and a power storage device packaging material for sealing the power storage device element,
   wherein the adhesive film for metal terminal comprises a laminate comprising at least an acid-modified polyolefin layer for forming a metal terminal-facing surface and a polyolefin layer for forming a power storage device packaging material-facing surface,
   the method comprises the step of obtaining a laminate comprising at least the polyolefin layer and the acid-modified polyolefin layer, and
   a ratio of arithmetic surface roughness RaA (µm) of the metal terminal-facing surface of the acid-modified polyolefin layer to arithmetic surface roughness RaB (µm) of the power storage device packaging material-facing surface of the polyolefin layer satisfies the relationship: RaA/RaB > 1.2.
Item 15. A metal terminal with an adhesive film for metal terminal, comprising the adhesive film for metal terminal according to any one of items 1 to 13, wherein the adhesive film for metal terminal is attached to a metal terminal.
Item 16. A power storage device comprising:
   the power storage device element comprising at least a positive electrode, a negative electrode, and an electrolyte;
   the power storage device packaging material for sealing the power storage device element; and
   the metal terminal electrically connected to each of the positive electrode and the negative electrode and protruding outside the power storage device packaging material,
   wherein the adhesive film for metal terminal according to any one of items 1 to 13 is interposed between the metal terminal and the power storage device packaging material.
Item 17. A method for producing a power storage device,
   the power storage device comprising:
   the power storage device element comprising at least a positive electrode, a negative electrode, and an electrolyte;
   the power storage device packaging material for sealing the power storage device element; and
   the metal terminal electrically connected to each of the positive electrode and the negative electrode and protruding outside the power storage device packaging material,
   the method comprising the step of interposing the adhesive film for metal terminal according to any one of items 1 to 13 between the metal terminal and the power storage device packaging material, and sealing the power storage device element with the power storage device packaging material.
Item 18. A kit comprising a power storage device packaging material for use in a power storage device and an adhesive film for metal terminal,
   wherein the power storage device comprises:
   a power storage device element comprising at least a positive electrode, a negative electrode, and an electrolyte;
   the power storage device packaging material for sealing the power storage device element; and
   a metal terminal protruding outside the power storage device,
   the adhesive film for metal terminal comprises a laminate comprising at least an acid-modified polyolefin layer for forming a metal terminal-facing surface and a polyolefin layer for forming a power storage device packaging material-facing surface,
   a ratio of arithmetic surface roughness RaA (µm) of the metal terminal-facing surface of the acid-modified polyolefin layer to arithmetic surface roughness RaB (µm) of the power storage device packaging material-facing surface of the polyolefin layer satisfies the relationship: RaA/RaB > 1.2, and
   the kit is used for interposing the adhesive film for metal terminal between the metal terminal and the power storage device packaging material, and sealing the power storage device element with the power storage device packaging material at the time of use.
Item 19. The kit according to item 18, wherein the adhesive film for metal terminal is attached to the metal terminal.
Item 20. A power storage device packaging material for use in a power storage device,
   wherein the power storage device comprises:
   a power storage device element comprising at least a positive electrode, a negative electrode, and an electrolyte;
   the power storage device packaging material for sealing the power storage device element; and
   a metal terminal protruding outside the power storage device,
   an adhesive film for metal terminal comprises a laminate comprising at least an acid-modified polyolefin layer for forming a metal terminal-facing surface and a polyolefin layer for forming a power storage device packaging material-facing surface,
   a ratio of arithmetic surface roughness RaA (µm) of the metal terminal-facing surface of the acid-modified polyolefin layer to arithmetic surface roughness RaB (µm) of the power storage device packaging material-facing surface of the polyolefin layer satisfies the relationship: RaA/RaB > 1.2, and
   the power storage device packaging material comprises a laminate comprising at least a base material layer, a barrier layer, and a heat-sealable resin layer in this order from an outer side.

### Reference Signs List

1: adhesive film for metal terminal
2: metal terminal
3: power storage device packaging material
3a: peripheral region of the power storage device packaging material
4: power storage device element
10: power storage device
11: acid-modified polyolefin layer
12: polyolefin layer
13: intermediate layer
31: base material layer
32: adhesive agent layer
33: barrier layer
34: adhesive layer
35: heat-sealable resin layer

## Claims

1. An adhesive film for metal terminal, which is to be interposed between a metal terminal electrically connected to an electrode of a power storage device element and a power storage device packaging material for sealing the power storage device element,
wherein the adhesive film for metal terminal comprises a laminate comprising at least an acid-modified polyolefin layer for forming a metal terminal-facing surface and a polyolefin layer for forming a power storage device packaging material-facing surface, and
a ratio of arithmetic surface roughness RaA (µm) of the metal terminal-facing surface of the acid-modified polyolefin layer to arithmetic surface roughness RaB (µm) of the power storage device packaging material-facing surface of the polyolefin layer satisfies the relationship: RaA/RaB > 1.2.

2. The adhesive film for metal terminal according to claim 1, wherein the arithmetic surface roughness RaB (µm) is 0.6 µm or less.

3. The adhesive film for metal terminal according to claim 1 or 2, wherein the power storage device packaging material-facing surface of the polyolefin layer has a gloss GuB (GU) of 15 GU or more as measured at an incidence angle of 60°.

4. The adhesive film for metal terminal according to claim 1 or 2, wherein a dynamic friction coefficient µB of the power storage device packaging material-facing surface of the polyolefin layer and a dynamic friction coefficient µA of the metal terminal-facing surface of the acid-modified polyolefin layer are both in a range of 0.1 to 0.5, as measured in accordance with the conditions in 8.1 Film to Film of JIS K 7125: 1999.

5. The adhesive film for metal terminal according to claim 1 or 2, wherein at least one of the acid-modified polyolefin layer and the polyolefin layer contains 1500 ppm or less of a lubricant.

6. The adhesive film for metal terminal according to claim 1 or 2, wherein the polyolefin layer contains at least one of random polypropylene and a terpolymer composed of ethylene-propylene-butene.

7. The adhesive film for metal terminal according to claim 1 or 2, wherein the acid-modified polyolefin layer contains acid-modified random polypropylene.

8. The adhesive film for metal terminal according to claim 1 or 2, further comprising an intermediate layer between the acid-modified polyolefin layer and the polyolefin layer,
wherein the intermediate layer contains homopolypropylene.

9. The adhesive film for metal terminal according to claim 1 or 2, further comprising an intermediate layer between the acid-modified polyolefin layer and the polyolefin layer,
wherein the adhesive film for metal terminal satisfies the relationship: the thickness of the intermediate layer > the thickness of the acid-modified polyolefin layer > the thickness of the polyolefin layer.

10. The adhesive film for metal terminal according to claim 1 or 2, wherein the adhesive film for metal terminal has a thickness of 50 µm or more and 250 µm or less.

11. The adhesive film for metal terminal according to claim 1 or 2, wherein the power storage device packaging material comprises a laminate comprising at least a base material layer, a barrier layer, and a heat-sealable resin layer in this order from an outer side, and
a resin forming the heat-sealable resin layer is identical to a resin forming the polyolefin layer.

12. The adhesive film for metal terminal according to claim 1 or 2, wherein the adhesive film for metal terminal contains a pigment.

13. The adhesive film for metal terminal according to claim 12, wherein the pigment is at least one of a black pigment and a white pigment, and
the pigment content in a layer containing the pigment is 0.05% by mass or more and 5.00% by mass or less.

14. A method for producing an adhesive film for metal terminal, which is to be interposed between a metal terminal electrically connected to an electrode of a power storage device element and a power storage device packaging material for sealing the power storage device element,
wherein the adhesive film for metal terminal comprises a laminate comprising at least an acid-modified polyolefin layer for forming a metal terminal-facing surface and a polyolefin layer for forming a power storage device packaging material-facing surface,
the method comprises the step of obtaining a laminate comprising at least the polyolefin layer and the acid-modified polyolefin layer, and
a ratio of arithmetic surface roughness RaA (µm) of the metal terminal-facing surface of the acid-modified polyolefin layer to arithmetic surface roughness RaB (µm) of the power storage device packaging material-facing surface of the polyolefin layer satisfies the relationship: RaA/RaB > 1.2.

15. A metal terminal with an adhesive film for metal terminal, comprising the adhesive film for metal terminal according to any one of claims 1 to 13, wherein the adhesive film for metal terminal is attached to a metal terminal.

16. A power storage device comprising:
the power storage device element comprising at least a positive electrode, a negative electrode, and an electrolyte;
the power storage device packaging material for sealing the power storage device element; and
the metal terminal electrically connected to each of the positive electrode and the negative electrode and protruding outside the power storage device packaging material,
wherein the adhesive film for metal terminal according to any one of claims 1 to 13 is interposed between the metal terminal and the power storage device packaging material.

17. A method for producing a power storage device,
the power storage device comprising:
the power storage device element comprising at least a positive electrode, a negative electrode, and an electrolyte;
the power storage device packaging material for sealing the power storage device element; and
the metal terminal electrically connected to each of the positive electrode and the negative electrode and protruding outside the power storage device packaging material,
the method comprising the step of interposing the adhesive film for metal terminal according to any one of claims 1 to 13 between the metal terminal and the power storage device packaging material, and sealing the power storage device element with the power storage device packaging material.

18. A kit comprising a power storage device packaging material for use in a power storage device and an adhesive film for metal terminal,
wherein the power storage device comprises:
a power storage device element comprising at least a positive electrode, a negative electrode, and an electrolyte;
the power storage device packaging material for sealing the power storage device element; and
a metal terminal protruding outside the power storage device,
the adhesive film for metal terminal comprises a laminate comprising at least an acid-modified polyolefin layer for forming a metal terminal-facing surface and a polyolefin layer for forming a power storage device packaging material-facing surface,
a ratio of arithmetic surface roughness RaA (µm) of the metal terminal-facing surface of the acid-modified polyolefin layer to arithmetic surface roughness RaB (µm) of the power storage device packaging material-facing surface of the polyolefin layer satisfies the relationship: RaA/RaB > 1.2, and
the kit is used for interposing the adhesive film for metal terminal between the metal terminal and the power storage device packaging material, and sealing the power storage device element with the power storage device packaging material at the time of use.

19. The kit according to claim 18, wherein the adhesive film for metal terminal is attached to the metal terminal.

20. A power storage device packaging material for use in a power storage device,
wherein the power storage device comprises:
a power storage device element comprising at least a positive electrode, a negative electrode, and an electrolyte;
the power storage device packaging material for sealing the power storage device element; and
a metal terminal protruding outside the power storage device,
an adhesive film for metal terminal comprises a laminate comprising at least an acid-modified polyolefin layer for forming a metal terminal-facing surface and a polyolefin layer for forming a power storage device packaging material-facing surface,
a ratio of arithmetic surface roughness RaA (µm) of the metal terminal-facing surface of the acid-modified polyolefin layer to arithmetic surface roughness RaB (µm) of the power storage device packaging material-facing surface of the polyolefin layer satisfies the relationship: RaA/RaB > 1.2, and
the power storage device packaging material comprises a laminate comprising at least a base material layer, a barrier layer, and a heat-sealable resin layer in this order from an outer side.
